# EUROPEAN PATENT APPLICATION

(11) **EP 4 521 732 A1**
(43) Date of publication of application: **12.03.2025**
(21) Application number: 23818785.0
(22) Date of filing: 20.03.2023
(51) Int. Cl.: H04N 7/14, H04L 9/32

(54) **MEETING DATA TRANSMISSION METHOD AND APPARATUS, AND DEVICE**

(30) Priority: 07.06.2022 CN 202210636942; 16.08.2022 CN 202210981404
(71) Applicant: Huawei Technologies Co., Ltd., Shenzhen, Guangdong 518129 (CN)
(72) Inventor: GENG, Feng, Shenzhen, Guangdong 518129 (CN); ZHAO, Gaoyong, Shenzhen, Guangdong 518129 (CN); TIAN, Wenyuan, Shenzhen, Guangdong 518129 (CN); CHEN, Xiaohua, Shenzhen, Guangdong 518129 (CN); LI, Yong, Shenzhen, Guangdong 518129 (CN)
(74) Representative: Pfenning, Meinig & Partner mbB
(86) International application number: PCT/CN2023/082404
(87) International publication number: WO 2023/236617

(57) **Abstract**

This application discloses a conference data transmission method, apparatus, and device, which are applied to the field of computer technologies. In the method, a first conference terminal obtains security data of a conference, generates a first digital watermark based on the security data, and sends first media data to a second conference terminal in the conference, where the first digital watermark is embedded in the first media data. The second conference terminal also generates, based on the obtained security data, a digital watermark corresponding to the first conference terminal, and matches the generated digital watermark with the first digital watermark extracted from the first media data, to determine whether a man-in-the-middle attack exists. Because an attacker cannot easily obtain the security data of the conference, it is difficult for the attacker to forge the first digital watermark, and therefore it is difficult to perform undiscovered attack behavior.

## Description

### TECHNICAL FIELD

This application relates to the field of computer technologies, and in particular, to a conference data transmission method, apparatus, and device.

### BACKGROUND

To implement secure data transmission, end-to-end encryption (end-to-end encryption, E2EE) is usually used for communication. The end-to-end encryption allows data to always exist in a form of ciphertext during transmission from a transmit end to a receive end. When end-to-end encryption is used for transmission of data, the data is not decrypted before reaching a destination. This helps prevent a potential attacker from obtaining an encryption key required for decrypting the data.

However, even if an end-to-end encryption mechanism is used, some security risks may still exist during data transmission, for example, a "man-in-the-middle attack" problem. The man-in-the-middle (man-in-the-middle, MitM) attack is an "indirect" intrusion attack. An attacker disguises as one or more entities involved in a data transmission process (in other words, the attacker is between two communication ends), to intercept and tamper with communication data between the two communication ends.

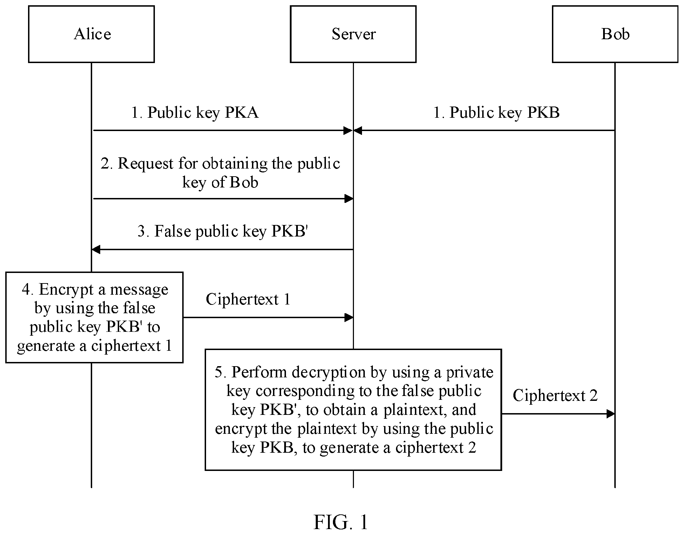

For example, in an example shown in FIG. 1, it is assumed that Alice communicates with Bob, and Server, as an attacker, wants to intercept a message sent by Alice to Bob and send a false message to Bob. In this process: 1. Alice sends a public key PKA of Alice to Bob, and Bob sends a public key PKB of Bob to Alice. However, messages of both parties are intercepted by Server, in other words, Bob does not receive the public key PKA of Alice, and Alice does not receive the public key PKB of Bob. 2. Alice does not receive the public key of Bob and therefore requests to obtain the public key of Bob. The request is still intercepted by Server. 3. Server sends a false public key PKB' to Alice. 4. Alice encrypts a message by using the false public key PKB' to generate a ciphertext 1 and sends the ciphertext 1. 5. After intercepting the ciphertext 1, Server decrypts the ciphertext 1 by using a private key corresponding to the false public key PKB' to obtain a plaintext, encrypts the plaintext by using the public key PKB to generate a ciphertext 2, and sends the ciphertext 2 to Bob. In the foregoing interception process, after decrypting data sent by Alice, Server may further tamper with the data based on a requirement of Server, encrypt the tampered data by using the public key PKB of Bob, and then send encrypted data to Bob.

In view of the above, how to prevent the man-in-the-middle attack is particularly important for communication security, and is an important topic of current research.

### SUMMARY

Embodiments of this application provide a conference data transmission method, apparatus, and device, to implement identity verification between a transmit end and a receive end during data transmission, and effectively prevent a man-in-the-middle attack.

According to a first aspect, an embodiment of this application provides a conference data transmission method, applied to a first conference terminal participating in a conference. The method includes: obtaining security data of the conference, where the security data of the conference includes one or more of the following: a master key of the conference, a conference joining password of the conference, a public key of at least one of a plurality of conference terminals participating in the conference, and a private key of the first conference terminal, where the master key is determined by the plurality of conference terminals through negotiation, and the plurality of conference terminals include the first conference terminal and a second conference terminal; generating a first digital watermark based on the security data; and sending first media data to the second conference terminal, where the first digital watermark is embedded in the first media data, for the second conference terminal to determine, based on the first digital watermark, whether a man-in-the-middle attack exists.

In the foregoing conference data transmission method, the first conference terminal generates the first digital watermark based on the security data of the conference, and sends the media data embedded with the first digital watermark to another conference terminal, so that when receiving the media data, the another conference terminal can further obtain the first digital watermark, and determine, based on the first digital watermark, whether a man-in-the-middle attack exists. Compared with conventional identity verification (the identity verification is performed only before data transmission), in the foregoing method, the conference terminal can still perform security verification based on the received media data in a data transmission process. This can further improve security of data transmission. In addition, even if an attacker can obtain some security data used to generate the digital watermark, it is difficult to obtain an algorithm for generating the digital watermark based on the security data. Therefore, it is difficult for the attacker to forge the first digital watermark, and it is difficult to perform undiscovered attack behavior.

In a possible implementation, the first media data includes N media frames. The method further includes: splitting the first digital watermark into N parts; and separately embedding the N parts of the first digital watermark in the N media frames, where N is an integer greater than 1. The digital watermark is split, so that a length of each part after the splitting is small. This can meet a requirement of a single media frame for a maximum length of an embedded watermark, so that when an audio or a video is played, no exception occurs due to an excessively long embedded digital watermark. The second conference terminal extracts the complete first digital watermark from the N media frames. In this case, a process of performing check based on the complete first digital watermark is equivalent to performing check on all the N media frames. Therefore, compared with a solution in which a complete digital watermark is embedded in each media frame, the foregoing solution can reduce a quantity of detection times of the second conference terminal, and reduce a performance requirement for the second conference terminal, but does not reduce a quantity of media frames detected by the second conference terminal.

In a possible implementation, the plurality of conference terminals further include a third conference terminal. The method further includes: sending the first media data to the third conference terminal, for the third conference terminal to determine, based on the first digital watermark, whether a man-in-the-middle attack exists. When the third conference terminal is further included in the conference, the first conference terminal may further send the first media data that is sent to the second conference terminal to the third conference terminal, so that when receiving the media data, the third conference terminal can also detect the man-in-the-middle attack based on the first digital watermark.

In a possible implementation, the security data includes the master key, the private key of the first conference terminal, and a public key of each of the plurality of conference terminals. The generating a first digital watermark based on the security data includes: generating the first digital watermark based on the master key, the private key of the first conference terminal, a public key of the first conference terminal, and a public key of the second conference terminal. In this implementation, the first digital watermark is generated based on the master key, the private key of the first conference terminal, the public key of the first conference terminal, and the public key of the second conference terminal. This increases complexity of generating the first digital watermark. However, it is difficult for the attacker to obtain all information used to generate the first digital watermark, and difficulty of cracking the first digital watermark is also significantly increased.

In a possible implementation, the plurality of conference terminals further include a third conference terminal. The method further includes: generating a second digital watermark based on the master key, the private key of the first conference terminal, the public key of the first conference terminal, and a public key of the third conference terminal; and sending second media data to the third conference terminal, where the second digital watermark is embedded in the second media data, for the third conference terminal to determine, based on the third digital watermark, whether a man-in-the-middle attack exists. When the third conference terminal is further included in the conference, different digital watermarks may be embedded in the media data sent by the first conference terminal to the second conference terminal and the third conference terminal. In other words, the first conference terminal generates different digital watermarks for different conference terminals. Even if the attacker cracks the first digital watermark, the attacker cannot send forged data to all conference terminals by using the first digital watermark.

In a possible implementation, the generating the first digital watermark based on the master key, the private key of the first conference terminal, a public key of the first conference terminal, and a public key of the second conference terminal includes: generating a public key character string based on the public key of the first conference terminal and the public key of the second conference terminal; generating a derived key based on the master key, an identifier of the first conference terminal, and an identifier of the second conference terminal; and performing digital signing on the public key character string and the derived key by using the private key of the first conference terminal to obtain the first digital watermark. There is a large quantity of security data used to generate the first digital watermark, and a generation manner is complex. In particular, it is difficult to crack and forge a digital signature. Therefore, obtaining the first digital watermark in the foregoing manner can further improve security of the first digital watermark, and increase difficulty of cracking the first digital watermark by the attacker.

In a possible implementation, the method further includes: receiving third media data sent by the second conference terminal; extracting a third digital watermark from the third media data; generating first verification information based on the security data; and determining, based on a matching result between the third digital watermark and the first verification information, whether a man-in-the-middle attack exists. The first conference terminal may embed the first digital watermark in the media data, so that the second conference terminal implements man-in-the-middle attack detection. The second conference terminal may also use a similar method to embed the digital watermark in the media data sent to the first conference terminal, so that the first conference terminal performs man-in-the-middle detection, to ensure security of bidirectional communication.

In a possible implementation, the security data includes the master key, the private key of the first conference terminal, and the public key of the second conference terminal; and the generating first verification information based on the security data includes: generating, based on the master key, the public key of the first conference terminal, and the public key of the second conference terminal, the first verification information corresponding to the second conference terminal. In this implementation, the third digital watermark may be generated based on the master key, the private key of the second conference terminal, the public key of the first conference terminal, and the public key of the second conference terminal. In this case, the first conference terminal may generate the corresponding first verification information based on the master key, the public key of the first conference terminal, and the public key of the second conference terminal, to detect the man-in-the-middle attack based on the first verification information.

In a possible implementation, the third digital watermark is data obtained through digital signing by using a private key of the second conference terminal; and the determining, based on a matching result between the third digital watermark and the first verification information, whether a man-in-the-middle attack exists includes: decrypting the third digital watermark by using the public key of the second conference terminal, matching data obtained through the decryption with the first verification information, and if the matching fails, determining that a man-in-the-middle attack exists. There is a large quantity of security data used to generate the third digital watermark, and a generation manner is complex. In particular, a digital signature is difficult to be cracked or forged. Therefore, security of the third digital watermark is high. Correspondingly, the first conference terminal needs to perform signature verification based on the public key of the second conference terminal.

In a possible implementation, the third media data includes M media frames, and the extracting a third digital watermark from the third media data includes: extracting M parts of the third digital watermark from the M media frames; and obtaining the third digital watermark based on the extracted M parts of the third digital watermark. The digital watermark is split, so that a length of each part after the splitting is small. This can meet a requirement of a single media frame for a maximum length of an embedded watermark, so that when an audio or a video is played, no exception occurs due to an excessively long embedded digital watermark. The first conference terminal extracts the complete third digital watermark from the M media frames. In this case, a process of performing check based on the complete third digital watermark is equivalent to performing check on all the M media frames. Therefore, compared with a solution in which a complete digital watermark is embedded in each media frame, the foregoing solution can reduce a quantity of detection times of the first conference terminal, and reduce a performance requirement for the first conference terminal, but does not reduce a quantity of media frames detected by the first conference terminal.

In a possible implementation, the security data includes the master key; and after the generating a first digital watermark based on the security data, the method further includes: when a fourth conference terminal joins the conference, updating the master key, and generating a fourth digital watermark based on an updated master key, where a plurality of conference terminals that obtain the updated master key through negotiation include the first conference terminal, the second conference terminal, and the fourth conference terminal; and sending fourth media data to the second conference terminal, where the fourth digital watermark is embedded in the fourth media data, for the second conference terminal to determine, based on the fourth digital watermark, whether a man-in-the-middle attack exists. In order to ensure timeliness of the digital watermark, the conference terminal that joins the conference later cannot obtain, based on the same digital watermark, media data generated before the conference terminal joins the conference, and the digital watermark may be updated when a new conference terminal joins the conference. Specifically, a method for generating a new digital watermark does not need to be changed, and the digital watermark can be updated by updating the master key used for generating the digital watermark.

In a possible implementation, the security data of the conference includes the master key, the plurality of conference terminals further include a fifth conference terminal. The method further includes: when the fifth conference terminal leaves the conference, updating the master key, and generating a fifth digital watermark based on an updated master key, where a plurality of conference terminals that obtain the updated master key through negotiation do not include the fifth conference terminal; and sending fifth media data to the second conference terminal, where the fifth digital watermark is embedded in the fifth media data, for the second conference terminal to determine, based on the fifth digital watermark, whether a man-in-the-middle attack exists. In order to ensure timeliness of the digital watermark, the conference terminal that leaves the conference cannot continue to obtain and send media data based on the same digital watermark, and the digital watermark may be updated when a conference terminal leaves the conference. Specifically, a method for generating a new digital watermark does not need to be changed, and the digital watermark can be updated by updating the master key used for generating the digital watermark.

According to a second aspect, an embodiment of this application provides a conference data transmission method, applied to a second conference terminal participating in a conference. The method includes: receiving first media data sent by a first conference terminal, where a first digital watermark is embedded in the first media data; extracting the first digital watermark from the first media data; generating first verification information based on security data of the conference, where the security data of the conference includes one or more of the following: a master key of the conference, a conference joining password of the conference, and a public key of at least one of a plurality of conference terminals participating in the conference, where the master key is determined by the plurality of conference terminals through negotiation, and the plurality of conference terminals include the first conference terminal and the second conference terminal; and determining, based on a matching result between the first digital watermark and the first verification information, whether a man-in-the-middle attack exists.

In a possible implementation, the first media data includes N media frames, and the extracting the first digital watermark from the first media data includes: extracting N parts of the first digital watermark from the N media frames; and obtaining the first digital watermark based on the extracted N parts of the first digital watermark.

In a possible implementation, the security data includes the master key, a public key of the first conference terminal, and a public key of the second conference terminal, and the first digital watermark is generated based on the security data. The generating first verification information based on security data of the conference includes: generating the first verification information based on the master key, the public key of the first conference terminal, and the public key of the second conference terminal.

In a possible implementation, the first digital watermark is obtained by performing digital signing on a public key character string and a derived key by using a private key of the first conference terminal, where the public key character string is generated based on the public key of the first conference terminal and the public key of the second conference terminal, and the derived key is generated based on the master key, an identifier of the first conference terminal, and an identifier of the second conference terminal. The generating the first verification information based on the master key, the public key of the first conference terminal, and the public key of the second conference terminal includes: generating the public key character string based on the public key of the first conference terminal and the public key of the second conference terminal, generating, by the second conference terminal, the derived key based on the master key, the identifier of the first conference terminal, and the identifier of the second conference terminal, and performing, by the second conference terminal, a hash operation on the public key character string and the derived key to obtain the first verification information. The determining, based on a matching result between the first digital watermark and the first verification information, whether a man-in-the-middle attack exists includes: decrypting the first digital watermark based on the public key of the first conference terminal, matching data obtained through the decryption with the first verification information, and if the matching fails, determining that a man-in-the-middle attack exists.

In a possible implementation, the security data includes the master key. The method further includes: when a third conference terminal joins the conference, updating the master key, and generating second verification information based on an updated master key, where a plurality of conference terminals that obtain the updated master key through negotiation include the first conference terminal, the second conference terminal, and the third conference terminal; receiving second media data sent by the first conference terminal, where a second digital watermark is embedded in the second media data; extracting the second digital watermark from the second media data; and determining, based on a matching result between the second digital watermark and the second verification information, whether a man-in-the-middle attack exists.

In a possible implementation, the security data of the conference includes the master key, and the plurality of conference terminals further include a fourth conference terminal. The method further includes: when the fourth conference terminal leaves the conference, updating the master key, and generating third verification information based on an updated master key, where a plurality of conference terminals that obtain the updated master key through negotiation do not include the fourth conference terminal; receiving third media data sent by the first conference terminal, where a third digital watermark is embedded in the third media data; extracting the third digital watermark from the third media data; and determining, based on a matching result between the third digital watermark and the third verification information, whether a man-in-the-middle attack exists.

According to a third aspect, an embodiment of this application provides a conference data transmission apparatus, where the apparatus is a first conference apparatus participating in a conference, and the apparatus includes modules/units for performing the method in the first aspect and any possible implementation. These modules/units may be implemented by hardware, or may be implemented by hardware executing corresponding software.

According to a fourth aspect, an embodiment of this application provides a conference data transmission apparatus, where the apparatus is a second conference apparatus participating in a conference, and the apparatus includes modules/units for performing the method in the second aspect and any possible implementation. These modules/units may be implemented by hardware, or may be implemented by hardware executing corresponding software.

According to a fifth aspect, an embodiment of this application provides a conference data transmission system, where the system includes at least the conference data transmission apparatus in the third aspect and the conference data transmission apparatus in the fourth aspect.

In a possible implementation, the system further includes a conference server, configured to: receive first media data sent by first conference data transmission, and send the first media data to a second conference apparatus.

According to a sixth aspect, an embodiment of this application provides a computer device, where the computer device includes a memory and a processor. The memory stores a computer program, and the processor is configured to invoke the computer program stored in the memory, to perform the method in the first aspect and any possible implementation, or perform the method in the second aspect and any possible implementation.

According to a seventh aspect, an embodiment of this application provides a computer-readable storage medium, where the computer-readable storage medium stores instructions. When the instructions are run on a computer, the computer is enabled to perform the method in the first aspect and any possible implementation, or perform the method in the second aspect and any possible implementation.

### BRIEF DESCRIPTION OF DRAWINGS

FIG. 1 is a flowchart of a man-in-the-middle attack method according to an embodiment of this application;
FIG. 2 is a diagram of a video conference scenario according to an embodiment of this application;
FIG. 3 is a diagram of an identity verification ceremony according to an embodiment of this application;
FIG. 4 is a flowchart of a conference data transmission method according to an embodiment of this application;
FIG. 5 is a diagram of a channel key negotiation process according to an embodiment of this application;
FIG. 6 is a diagram of another channel key negotiation process according to an embodiment of this application;
FIG. 7 is a flowchart of another conference data transmission method according to an embodiment of this application;
FIG. 8 is a flowchart of still another conference data transmission method according to an embodiment of this application;
FIG. 9 is a flowchart of yet another conference data transmission method according to an embodiment of this application;
FIG. 10 is a diagram of a structure of a conference data transmission apparatus according to an embodiment of this application;
FIG. 11 is a diagram of a structure of another conference data transmission apparatus according to an embodiment of this application; and
FIG. 12 is a diagram of a structure of a computer device according to an embodiment of this application.

### DESCRIPTION OF EMBODIMENTS

There are two methods to prevent an attack: identity verification and tampering detection.

A common identity verification method is to verify authenticity of a public key by using a CA certificate issued by a certificate authority (certification authority, CA). For example, Alice and Bob exchange CA certificates with each other. Alice can use a certificate that is provided by Bob and that is signed by a trusted CA to verify authenticity of a public key of Bob. For example, Bob applies to a third-party CA for verification. After the verification succeeds, the third-party CA sends a CA certificate to Bob. Bob sends the CA certificate to Alice. If the third-party CA is a CA trusted by Alice, Alice is configured with a public key of the third-party CA. In this case, Alice may verify signature data in the CA based on the public key of the third-party CA and plaintext information in the CA certificate. If the signature verification succeeds, Alice considers that the obtained public key is an authentic public key of Bob. However, if an attacker successfully controls the CA, the attacker can forge a CA certificate, pass identity verification based on the forged CA certificate, and initiate a man-in-the-middle attack.

Tampering detection is to detect whether received information is tampered with. There is no automatic mechanism (the automatic mechanism usually means that a tampering detection process is automatically detected by a system without user participation) for tampering detection, to prevent an attack during data transmission. Currently, end-to-end opportunistic encryption is mostly used to implement secure data transmission (The opportunistic encryption usually means that when creating a communication connection, an initiator first attempts to request encryption. If the other party also supports an encrypted connection, the initiator establishes an encrypted connection channel without performing identity verification. If the encryption request fails, the initiator falls back to a plaintext communication mechanism.). However, the opportunistic encryption can only prevent a passive attack, but cannot prevent an active attack, like a man-in-the-middle attack.

The following uses a video conference scenario as an example to describe the man-in-the-middle attack.

Generally, a video conference may include a plurality of participants, and one participant joins the video conference by using one conference terminal. A form of the conference terminal may be a dedicated physical device, or may be a software program having a conference function. The software program may be run on various computing devices, for example, various user terminals such as a mobile phone, a tablet, and a computer. In this case, the computing device running the software program may also be considered as a conference terminal. The conference terminal joins the video conference via a conference service platform. Specifically, the conference terminal may obtain media data of the video conference from the conference service platform, and send locally collected media data to the conference server platform, so that the conference service platform forwards the media data to another conference terminal participating in the conference. The conference terminal can be connected through a wireless network, so that the participant can join the video conference without being restricted by a geographical location. In some cases, one participant may include only one participant user, for example, the participant user joins the video conference by using a conference software program running on a mobile phone. In some cases, one participant may alternatively include a plurality of participant users, for example, in a conference room scenario, a plurality of participant users in a conference room join the video conference by using a conference terminal in the conference room.

In the video conference scenario, in a process in which a plurality of participants join a conference, a communication channel established between a conference terminal and a conference server platform includes a signaling channel and a media channel. The signaling channel is generally used to bearer call signaling and conference control signaling. The media channel is generally used to bearer real-time audio and video encoding streams. The media channel is also generally referred to as an in-band channel of a video conference. In this scenario, a key material required for E2EE generally includes public keys of all participants, and the public keys may be transmitted through the communication channel established with the conference server platform. If a man-in-the-middle attack exists on the communication channel, an attacker can perform attack behavior such as reading, tampering, inserting, deleting, and rearrangement on transmitted data.

Because the video conference has a continuous interaction attribute, if the participants are familiar with each other, each participant can hear voices of other participants in real time, see images of the other participants in real time, and observe and identify identities of the other participants through the voices and the images. Therefore, it is very difficult for the attacker to forge the voices or images. Generally, an attack means like artificial intelligence (artificial intelligence, AI) is required. In this case, the attacker can only read data in the video conference, but cannot tamper with, insert, or delete data (unless a large quantity of attack resources are invested). Therefore, identity verification may be performed by using a feature that a user can perform auxiliary identification in a video conference based on a voice and an image.

In the example shown in FIG. 1, in the video conference scenario, a man-in-the-middle attack is implemented by replacing a public key of each participant on the communication channel of the video conference by the attacker. In a possible solution, in a video conference process, an interaction ceremony may be performed by all participants, for example, a participant reads a received public key aloud, to determine whether the received public key is an authentic public key, to detect whether a man-in-the-middle attack occurs. A process in which each participant participates in key verification through the user is called an identity verification ceremony.

To facilitate the identity verification ceremony of each participant, each conference terminal in a conference may independently calculate security code of a conference moderator, for example, the security code of the conference moderator is Security Code=Wordify (Hash (a public key of a conference terminal used by the conference moderator)), where a Wordify function is used to convert a binary hash into human-readable code. A longer length of the security code Security Code is more conducive to preventing an attacker from cracking the security code.

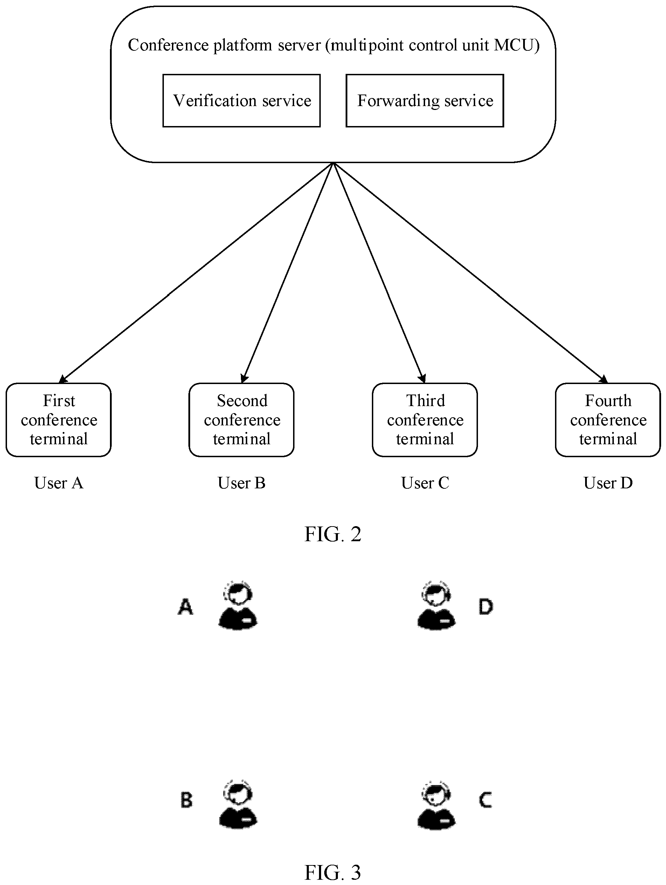

The following uses FIG. 2 as an example to describe a system (referred to as a video conference system) applied in a video conference scenario. It is assumed that the system includes a conference platform service and four conference terminals, and four conference participant users (a user A, a user B, a user C, and a user D) respectively access a conference through a first terminal, a second terminal, a third terminal, and a fourth terminal. In FIG. 2, an example in which a conference platform server is a multipoint control unit (multipoint control unit, MCU) is used. The MCU provides a verification service (by using a conference terminal used by a participant user) for a user, and forwards conference data. For example, the first conference terminal sends video data on a side of the user A to the MCU, and the MCU forwards the video data to the second conference terminal, the third conference terminal, and the fourth conference terminal, so that the user B, the user C, and the user D can view a video image of the user A through the second conference terminal, the third conference terminal, and the fourth conference terminal respectively. As shown in FIG. 3, it is assumed that the user A is a moderator. The user A may sequentially perform an identity verification ceremony with the user B, the user C, and the user D by using the first conference terminal. In other words, the user B, the user C, and the user D respectively sequentially read security code of the conference moderator through the second conference terminal, the third conference terminal, and the fourth conference terminal. The moderator may determine whether the security code read by the user B, the user C, and the user D is correct security code. If security code read by a user is incorrect, the moderator can remove the user from the conference and change a conference key. The user who is removed from the conference can be verified again and join the conference.

However, because a large quantity of materials related to a conference E2EE key are required for calculating the security code, and there is a scenario in which users continuously enter and exit during a conference, the security code may need to be refreshed frequently. If the moderator just sends the security code, a participant joins or leaves the conference, and out-of-band security code is refreshed again, it is difficult to perform the identity verification ceremony normally, or the moderator needs to perform the identity verification ceremony for a plurality of times. In addition, the identity verification ceremony can only be driven by a ceremony event and verification cannot be continuously performed. If the user continuously reads the security code, the conference cannot be held normally. The identity verification can be performed only once at an interval. However, security cannot be ensured between two times of verification. In addition, implementation of the foregoing method depends on human-participated security code verification. Due to restrictions of human-computer interaction (human-computer interaction, HCI) experience, security code generated by a user interface cannot be excessively long, and is actually truncated security code. However, the truncated security code is easily forged or cracked, and therefore a security risk is introduced.

In view of this, an embodiment of this application provides a conference data transmission method, which is used to automatically detect whether man-in-the-middle attack behavior exists. In an implementation process, a participant is not disturbed, a conference is not interrupted, and security is high.

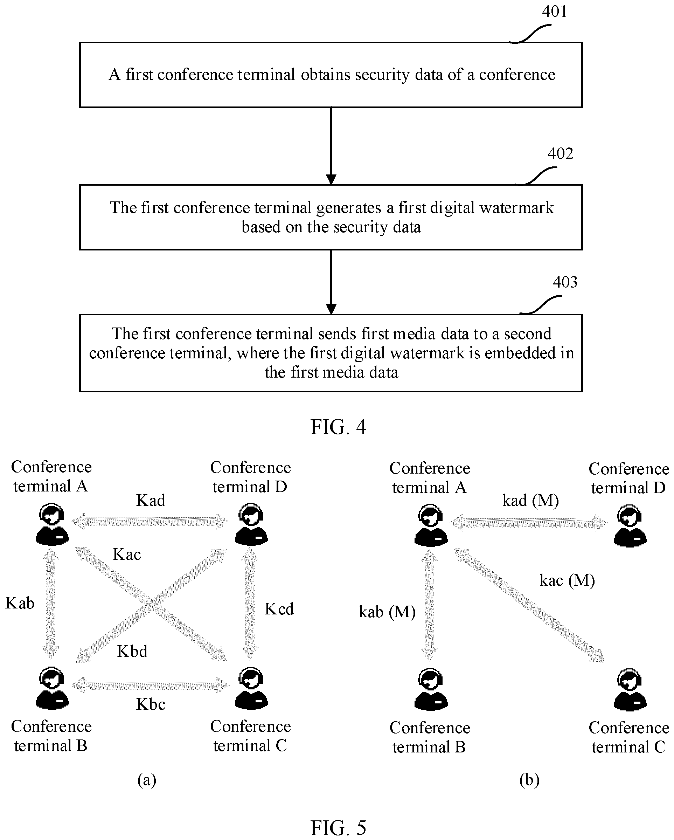

The method may be applied to any conference terminal in the video conference system shown in FIG. 2. FIG. 4 is a flowchart of a conference data transmission method according to an embodiment of this application. In an example shown in FIG. 4, an example in which a conference includes a first conference terminal and a second conference terminal is used for description, but more conference terminals may be further included. As shown in FIG. 4, the first conference terminal may perform the following steps.

Step 401: The first conference terminal obtains security data of a conference.

The security data of the conference may be used to generate a digital watermark, and further used to detect a man-in-the-middle attack. Optionally, the security data of the conference may include one or more items of the following data:

### (1) A master key of the conference

The master key is used to encrypt and decrypt media data and control signaling transmitted in the conference to implement end-to-end encryption. In embodiments of this application, the master key may be further used to generate the digital watermark.

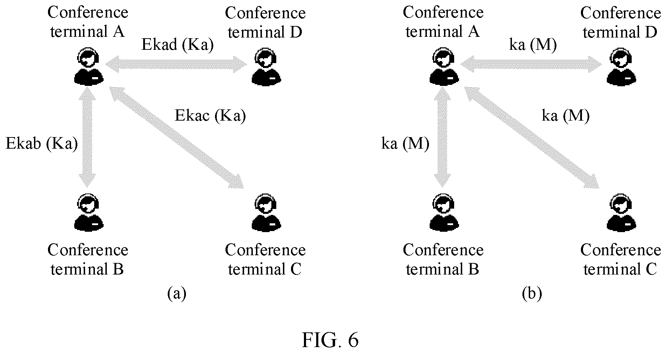

The master key of the conference may be obtained through negotiation by a plurality of conference terminals (generally all conference terminals participating in the conference) participating in the conference, and a negotiation process may be performed based on an E2EE key agreement protocol or a group key agreement protocol. Two common key negotiation processes based on the E2EE key agreement protocol may be shown in FIG. 5 and FIG. 6.

In the channel key agreement protocol negotiation process shown in FIG. 5, every two conference terminals form a communication pair. In a case in which a conference includes 4 conference terminals, there are 6 communication pairs in total, and each communication pair has a communication key. As shown in (a) in FIG. 5, a communication key between a conference terminal A and a conference terminal B is Kab, and a communication key between the conference terminal A and a conference terminal C is Kac, a communication key between the conference terminal A and a conference terminal D is Kad, a communication key between the conference terminal B and the conference terminal C is Kbc, a communication key between the conference terminal B and the conference terminal D is Kbd, and a communication key between the conference terminal C and the conference terminal D is Kcd. After the conference terminal A serving as a conference manager generates a master key M, as shown in (b) in FIG. 5, the conference terminal A encrypts the master key M by using Kab, and sends an encrypted master key to a user B; encrypts the master key M by using Kac, and sends an encrypted master key to the conference terminal C; and encrypts the master key M by using Kad, and sends an encrypted master key to the conference terminal D.

FIG. 6 shows a process of performing key negotiation based on a signal (Signal) protocol in the E2EE key agreement protocol. In an example of channel key negotiation shown in (a) in FIG. 6, each conference terminal has a sender key different from that of other conference terminals. When sending a message, the conference terminal uses a sender key of the conference terminal to encrypt a message to be sent, and sends an encrypted message to another user. The conference terminal A is used as an example. The conference terminal A may randomly generate a sender key Ka of the conference terminal A, and then encrypt the sender key Ka by using a pairing key EKab with the conference terminal B, and send an encrypted sender key EKab (Ka) to the conference terminal B; encrypt the sender key Ka by using a pairing key EKac with the conference terminal C, and send an encrypted sender key EKab (Ka) to the conference terminal C; and encrypt the sender key Ka by using a pairing key with the conference terminal D, and send an encrypted sender key EKad (Ka) to the conference terminal D. After the conference terminal A serving as the conference manager generates the master key M, as shown in (b) in FIG. 6, the conference terminal A encrypts the master key M by using Ka, and sends an encrypted master key to the conference terminal B, the conference terminal C, and the conference terminal D.

Certainly, FIG. 5 and FIG. 6 are merely examples of channel key negotiation. A process of negotiating the master key is not limited in embodiments of this application. The master key may be negotiated in another manner, for example, the master key may be negotiated based on the message layer security (Message Layer Security, MLS) protocol in the group key agreement protocol.

### (2) A public key of at least one of a plurality of conference terminals participating in a conference

It should be understood that the plurality of conference terminals participating in the conference include at least the first conference terminal and the second conference terminal, and may further include more conference terminals. At least one of the plurality of conference terminals, namely, some or all of the conference terminals participating in the conference, may include the first conference terminal, may include the second conference terminal, and may also include a conference terminal used by a conference manager (for example, a moderator) (certainly, the conference terminal used by the conference manager may be the first conference terminal, the second conference terminal, or another conference terminal).

A public key (public key) and a private key (private key) are a key pair obtained by using an algorithm. If a key in a key pair is used to encrypt a segment of data, the other key is required for decryption. For example, if the public key is used to encrypt data, the private key is used for decryption; if the private key is used to encrypt data, the public key is used for decryption. Otherwise, decryption fails. The public key is a part of the key pair and is open to a communication peer.

In embodiments of this application, the public key and the private key of the conference terminal may be a public key and a private key of the conference terminal (for example, a dedicated conference terminal equipped in a conference room may be used by one or more users, and the dedicated conference terminal has a public key and a private key), or may be a public key and a private key of a login user on the conference terminal (for example, the conference terminal is a computing device running a conference application, and a public key of a current login user on the conference application is a public key and a private key of the conference terminal, and if the login user is changed, the public key and the private key of the conference terminal change accordingly).

Optionally, the public key may include a long-term public key and/or a temporary public key. The long-term public key may be an unchanged public key generated when a login user on the conference terminal is registered, or a public key generated when the conference terminal is registered in a conference system. The temporary public key indicates a public key that is valid in a period of time and that is to be updated, for example, the temporary public key is updated at intervals or a temporary public key is generated each time the conference terminal joins a conference.

The public key of the at least one of the plurality of conference terminals participating in the conference may be obtained from a server. The first conference terminal and the second conference terminal may send public keys of the first conference terminal and the second conference terminal to the server (for example, the MCU shown in FIG. 2) in advance. When the conference further includes another conference terminal, the another conference terminal may also send a public key of the another conference terminal to the server in advance. In this case, the first conference terminal may obtain the public key of the second conference terminal and/or the public key of the another conference terminal from the server. Similarly, the another conference terminal may also obtain a required public key of a conference terminal from the server.

### (3) A private key of the first conference terminal

The private key of the first conference terminal and the public key of the first terminal may form a key pair, and the private key is a non-public part of the key pair. Normally, the private key of the first conference terminal cannot be learned by another conference terminal or the server.

When security data of the conference includes the public key and/or the private key of the first conference terminal, the public key and/or the private key of the first conference terminal may be obtained in the following manners.

If the public key/private key of the first conference terminal is a public key/private key of the first conference terminal, the first conference terminal reads the required public key and/or private key from a memory. If the public key/private key of the first conference terminal is a public key/private key of a login user on the first conference terminal, the first conference terminal can obtain the public key/private key based on information of the login user when the user logs in. In some cases, the login user may not exist on the first conference terminal (for example, a conference terminal in a conference room is public and does not require user login). However, during the conference, the first conference terminal may be bound (temporarily bound) to a participant user. In this case, the first conference terminal may alternatively use a public key/private key of the user bound to the first conference terminal or a public key/private key of a user terminal as the public key/private key of the first conference terminal. If the public key/private key of the first conference terminal is a public key/private key of a user, or a public key/private key of a user terminal (like a mobile phone or a tablet computer of the user), and the first conference terminal and the user terminal are two different physical devices, the first conference terminal may obtain the public key of the user or the user terminal through Bluetooth, near field communication (near field communication, NFC), a user input, or the like. When generating a first digital watermark, the first conference terminal may first generate to-be-signed information based on the public key, for example, a public key character string allGroupPK and a derived key OTP_OOB, and then send the to-be-signed information to the user terminal. The user terminal performs digital signing on the to-be-signed information based on the private key, and sends digitally signed information, namely, the first digital watermark, to the first conference terminal.

### (4) A conference joining password

When creating a conference, a conference joining password for the conference can be set. A conference terminal that is to join the conference needs to use a correct conference joining password to join the conference. If the conference joining password is not known to the conference terminal, the conference terminal cannot join the conference.

The conference joining password of the conference may be obtained through an in-band channel, for example, the first conference terminal may obtain the conference joining password from the server, or may obtain the conference joining password through an out-of-band channel (that is not a channel of a conference system). For example, the server sends the conference joining password to a first user corresponding to the first conference terminal in a form of short message, email, or the like, and then the first user transmits the conference joining password to the first conference terminal through Bluetooth, NFC, or an input.

The foregoing information may be used as the security data to generate a digital watermark, but information that can be used as the security data is not limited thereto. Other information may also be used as the security data. This is not limited in embodiments of this application.

Step 402: The first conference terminal generates the first digital watermark based on the security data.

The first digital watermark generated based on the security data is used to detect a man-in-the-middle attack. In other words, it is considered that the first digital watermark can be obtained only by a legal conference terminal of the conference, and is not obtained or forged by another person.

Specifically, the security data may include the master key of the conference and/or a public key of a conference terminal corresponding to a conference manager. In this case, the first conference terminal may generate the first digital watermark based on the master key of the conference and/or the public key of the conference terminal corresponding to the conference manager. For example, the master key may be used as the first digital watermark, or the public key of the conference terminal corresponding to the conference manager may be used as the first digital watermark, or the master key and the public key of the conference terminal corresponding to the conference manager may be calculated based on a preset algorithm to obtain the first digital watermark.

The security data may include the conference joining password, and the first conference terminal may generate the first digital watermark based on the conference joining password. For example, the conference joining password may be used as the first digital watermark, or the conference joining password may be calculated based on a preset algorithm to obtain the first digital watermark.

The security data may further include the master key of the conference, the private key of the first conference terminal, the public key of the first conference terminal, and a public key of the second conference terminal. In this case, the first conference terminal may generate the first digital watermark based on the master key of the conference, the private key of the first conference terminal, the public key of the first conference terminal, and the public key of the second conference terminal.

Further, the conference may include more conference terminals, and the security data may include the master key, the private key of the first conference terminal, and public keys of all conference terminals in the conference. In this case, the first conference terminal may also generate the first digital watermark based on the master key, the private key of the first conference terminal, and the public keys of all the conference terminals in the conference, to further improve security of the first digital watermark. Generally, a larger quantity of conference security data used to generate the first digital watermark indicates less proneness to being obtained by an attacker, and higher security of the generated digital watermark. Specifically, even if the attacker can intercept the master key or obtain public key information of a conference terminal, it is difficult for the attacker to obtain information about all conference terminals participating in the conference, and therefore it is difficult to obtain public keys of all conference terminals participating in the conference. Therefore, the attacker cannot generate the digital watermark based on the obtained information, and cannot perform an attack.

In a specific example, when the security data includes the master key, the private key of the first conference terminal, the public key of the first conference terminal, and the public key of the second conference terminal, the first conference terminal may generate the first digital watermark in the following manners.

The first conference terminal may first generate the public key character string based on the public key of the first conference terminal and the public key of the second conference terminal. For example, a public key character string allGroupPK=pkA ∥ pkB may be assumed, where a symbol ∥ indicates character string concatenation, pkA indicates a public key of a user A, and pkB indicates a public key of a user B. For another example, when the public key information includes a long-term public key and a temporary public key, a public key character string allGroupPK=epkA ∥ epkB ∥ LongPKA ∥ LongPKB ∥ may be assumed, where epkA indicates a temporary public key of the user A, epkB indicates a temporary public key of the user B, LongPKA indicates a long-term public key of the user A, and LongPKB indicates a long-term public key of the user B. Further, the public key character string may be generated by using a public key of another conference terminal in the conference, or may be generated based on public keys of all conference terminals in the conference.

Then, the first conference terminal may generate a derived key based on the master key, an identifier of the first conference terminal, and an identifier of the second conference terminal. For example, a derived key OTP_OOB=KDF (mk, IDA ∥ IDB ∥ "OOB") may be assumed, where mk indicates the master key, IDA indicates an identifier of the user A, IDB indicates an identifier of the user B, and OOB indicates an out-of-band parameter. The out-of-band parameter may be pre-generated by a conference server like an MCU, and out-of-band parameters of different conferences may be the same or may be different. Further, the derived key may alternatively be generated based on an identifier of another conference terminal in the conference, or may be generated based on identifiers of all the conference terminals in the conference.

Finally, the first conference terminal may generate the first digital watermark based on the private key, the public key character string, and the derived key of the first conference terminal. Optionally, the first conference terminal may perform digital signing on the public key character string and the derived key by using the private key of the first conference terminal. For example, the first conference terminal first performs a hash operation on the public key character string and the derived key to obtain a hash value Hash (OTP_OOB, allGroupPK), and then encrypts the hash value based on the private key of the first conference terminal, to obtain the first digital watermark R. Because a digital signature is difficult to be cracked or forged, obtaining the first digital watermark by using the digital signature can further improve security of the digital watermark.

Step 403: The first conference terminal sends first media data to the second conference terminal, where the first digital watermark is embedded in the first media data.

The first conference terminal embeds the generated first digital watermark in the to-be-sent first media data (such as an audio frame or a video frame). For example, the first digital watermark may be encoded, and encoded information is embedded in a preset location of the video frame, that is, data in the preset location of the video frame is replaced with the encoded information. If the data embedded with the digital watermark is copied, the embedded information is copied. Digital watermarks can be classified into two types: an emergent watermark and a hidden watermark. The emergent watermark is a visible watermark, and information contained in the watermark can be seen when an image and a video are viewed. The hidden watermark is added to an image, an audio, or a video as digital data, but cannot be seen normally. Whether the digital watermark is embedded in an emergent manner or in a hidden manner is not limited in embodiments of this application.

The first conference terminal sends the first media data embedded with the first digital watermark to the second conference terminal, so that after receiving the first media data, the second conference terminal can extract the first digital watermark from the first media data, and detect, based on the extracted first digital watermark, whether a man-in-the-middle attack exists.

Specifically, the second conference terminal may also generate verification information R' based on the foregoing security data, and after receiving the first media data, the second conference terminal may extract the first digital watermark R from the first media data, and perform man-in-the-middle attack detection based on the extracted first digital watermark R and the generated verification information R'. A manner in which the second conference terminal generates the verification information R' is similar to a principle in which the first conference terminal generates the first digital watermark R. For example, if the first conference terminal generates the first digital watermark R based on the master key of the conference and/or the public key of the conference manager, the second conference terminal also generates the verification information R' based on the master key of the conference and/or the public key of the conference manager. If the first conference terminal generates the first digital watermark R based on the conference joining password, the second conference terminal also generates the verification information R' based on the conference joining password. If the first conference terminal generates the first digital watermark R based on the master key of the conference, the private key of the first conference terminal, the public key of the first conference terminal, and the public key of the second conference terminal, because the second conference terminal cannot obtain the private key of the first conference terminal, the public key of the first conference terminal is used to replace the private key of the first conference terminal, that is, the second conference terminal generates the verification information R' based on the master key of the conference, the public key of the first conference terminal, and the public key of the second conference terminal. Then, the second conference terminal may verify whether the first digital watermark R matches the verification information R'. If the first digital watermark R matches the verification information R', it is considered that no man-in-the-middle attack behavior exists; otherwise, it is considered that man-in-the-middle attack behavior exists.

When the plurality of conference terminals in the conference further include another conference terminal in addition to the first conference terminal and the second conference terminal, for example, further include a third conference terminal, the first conference terminal may further send the first media data to the third conference terminal, so that the third conference terminal can also detect, based on the first digital watermark, whether a man-in-the-middle attack exists. A manner in which the third conference terminal detects, based on the first digital watermark, whether a man-in-the-middle attack exists is similar to a manner in which the second conference terminal detects, based on the first digital watermark, whether a man-in-the-middle attack exists. For details, refer to the foregoing implementation of the second conference terminal, and details are not described herein.

When the conference further includes the third conference terminal, in another possible implementation, different digital watermarks may be embedded in the media data sent by the first conference terminal to the second conference terminal and the third conference terminal. For example, the first digital watermark embedded in the first media data sent to the second conference terminal is generated based on the master key, the private key of the first conference terminal, the public key of the first conference terminal, and the public key of the second conference terminal; and a second digital watermark embedded in second media data sent to the third conference terminal may be generated based on the master key, the private key of the first conference terminal, the public key of the first conference terminal, and a public key of the third conference terminal.

In the foregoing conference data transmission method, the first conference terminal generates the first digital watermark based on the security data of the conference, and sends the media data embedded with the first digital watermark to another conference terminal, so that when receiving the media data, the another conference terminal can further obtain the first digital watermark, and determine, based on the first digital watermark, whether a man-in-the-middle attack exists. Compared with conventional identity verification (the identity verification is performed only before data transmission), in the foregoing method, the conference terminal can still perform security verification based on the received media data in a data transmission process. This can further improve security of data transmission. In addition, even if an attacker can obtain some security data used to generate the digital watermark, it is difficult to obtain an algorithm for generating the digital watermark based on the security data. Therefore, it is difficult for the attacker to forge the first digital watermark, and it is difficult to perform undiscovered attack behavior.

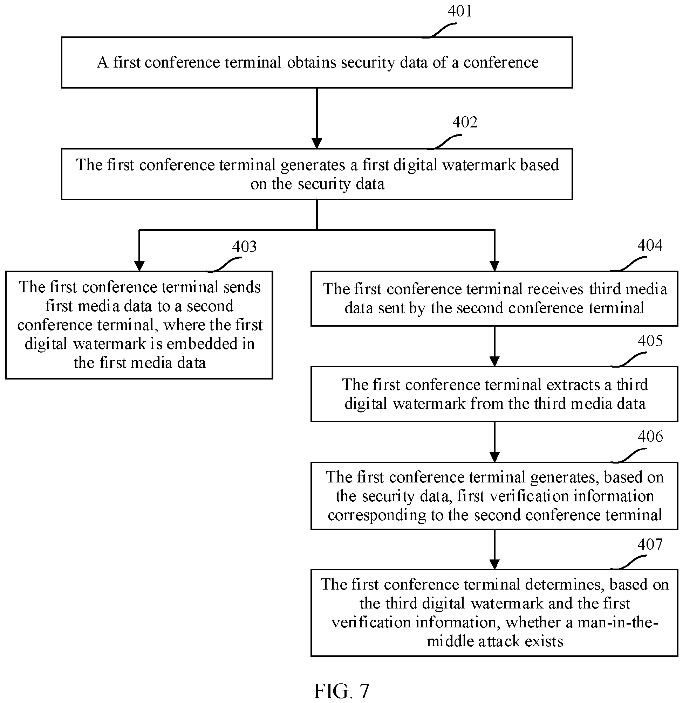

In a conference process, the first conference terminal may use the foregoing method of embedding the digital watermark in the media data, so that another conference terminal implements man-in-the-middle attack detection. The another conference terminal may also use a similar method to embed the digital watermark in the media data sent to the first conference terminal, so that the first conference terminal performs man-in-the-middle detection. FIG. 7 is used as an example in the following to describe another conference data transmission method provided in an embodiment of this application. As shown in FIG. 7, in addition to the foregoing step 401 to step 403, the method may further include the following steps.

Step 404: The first conference terminal receives third media data sent by the second conference terminal.

In this step, the first conference terminal has not performed man-in-the-middle attack detection. Therefore, the first conference terminal considers, based on an identifier of a transmit end (for example, an ID of the transmit end, or a number of the transmit end in the conference) carried in the received third media data, that the third media data is sent by the second conference terminal. However, whether the third media data is sent by the second conference terminal or by the attacker needs to be verified by the first conference terminal based on the following step 405 to step 407.

Step 405: The first conference terminal extracts a third digital watermark from the third media data.

If the third digital watermark is embedded in the received third media data, the first conference terminal extracts the third digital watermark from the third media data, and continues to perform a process of man-in-the-middle attack detection, that is, verifies, based on the third digital watermark, whether the third media data is sent by the second conference terminal.

If the first conference terminal does not extract the third digital watermark from the third media data, it may be considered that the third media data is not generated by the second conference terminal, and it is determined that a man-in-the-middle attack exists.

Step 406: The first conference terminal generates, based on the security data, first verification information corresponding to the second conference terminal.

A manner of generating the first verification information by the first conference terminal is similar to a manner of generating the third digital watermark by the second conference terminal. For example, if the second conference terminal generates the third digital watermark based on the master key of the conference and/or the public key of the conference terminal corresponding to the manager, the first conference terminal also generates the first verification information based on the master key of the conference and/or the public key of the conference terminal corresponding to the manager. If the second conference terminal generates the third digital watermark based on the conference joining password, the first conference terminal also generates the first verification information based on the conference joining password. If the second conference terminal generates the third digital watermark based on the master key of the conference, the private key of the second conference terminal, the public key of the first conference terminal, and the public key of the second conference terminal, because the first conference terminal cannot obtain the private key of the second conference terminal, the public key of the second conference terminal is used to replace the private key of the second conference terminal, that is, the first conference terminal generates the first verification information based on the master key of the conference, the public key of the first conference terminal, and the public key of the second conference terminal.

A sequence in which the first conference terminal performs step 405 and step 406 is not limited in embodiments of this application. When creating a conference or joining a conference, the first conference terminal may generate the corresponding first verification information for the second conference terminal for subsequent use; or the first conference terminal may generate the corresponding first verification information after receiving the third media data sent by the second conference terminal. However, for the second conference terminal, the first conference terminal needs to generate the first verification information only once, and does not need to perform an operation of generating the first verification information each time the media data sent by the second conference terminal is received. However, when the security data used to generate the first verification information changes, the first conference terminal needs to generate new first verification information. For example, when the security data includes the public key of the second conference terminal, and the public key includes a long-term public key and a temporary public key, the first verification information that is generated by the first conference terminal and that corresponds to the second conference terminal is valid within a validity period of the temporary public key of the second conference terminal. If the temporary public key of the second conference terminal is updated, the first conference terminal needs to update the corresponding first verification information. For another example, when the security data includes the master key, and the master key is updated, the first conference terminal needs to update the first verification information based on an updated master key.

In some embodiments, the first digital watermark generated by the first conference terminal may be the same as the third digital watermark generated by the second conference terminal. For example, when the first conference terminal generates the first digital watermark only based on the master key of the conference and/or the public key of the conference terminal corresponding to the manager, and the second conference terminal also generates the third digital watermark based on the master key of the conference and/or the public key of the conference terminal corresponding to the manager, the first digital watermark and the third digital watermark may be the same. In this case, to simplify operations of the first conference terminal, the first conference terminal may directly use the generated first digital watermark as the first verification information.

Step 407: The first conference terminal determines, based on the third digital watermark and the first verification information, whether a man-in-the-middle attack exists.

The first conference terminal determines whether the extracted third digital watermark matches the generated first verification information; and if the extracted third digital watermark matches the generated first verification information, it is considered that no man-in-the-middle attack exists; otherwise, it is considered that a man-in-the-middle attack exists.

When determining whether the extracted third digital watermark matches the generated first verification information, the first conference terminal may directly match the third digital watermark with the first verification information, or the first conference terminal may process the extracted third digital watermark, and match processed information with the first verification information. For example, the third digital watermark is obtained by the second conference terminal through signing by using the private key of the second conference terminal, and the first conference terminal may perform signature verification on the third digital watermark by using the public key of the second conference terminal, and match data obtained after the signature verification with the first verification information.

For example, if the third digital watermark generated by the second conference terminal is generated based on the master key and the public key of the conference terminal corresponding to the manager, the first conference terminal generates the first verification information based on the master key and the public key of the conference terminal corresponding to the manager. After receiving the third media data sent by the second conference terminal and extracting the third digital watermark from the third media data, the first conference terminal may directly compare the third digital watermark with the first verification information to determine whether the third digital watermark is the same as the first verification information.

For another example, in a case in which conference data includes the master key, the public key of the first conference terminal, and the public key of the second conference terminal, the second conference terminal generates the public key character string allGroupPK based on the public key of the first conference terminal and the public key of the second conference terminal, generates the derived key OTP_OOB based on the master key, the identifier of the first conference terminal, and the identifier of the second conference terminal, and performs digital signing on the public key character string allGroupPK and the derived key OTP_OOB by using the private key of the second conference terminal, to obtain the third digital watermark R. In this case, the first conference terminal generates a public key character string allGroupPK' based on the public key of the first conference terminal and the public key of the second conference terminal, generates a derived key OTP_OOB' based on the master key, the identifier of the first conference terminal, and the identifier of the second conference terminal, performs a hash operation on the public key character string allGroupPK' and OTP_OOB' to obtain a hash value Hash', and uses the hash value Hash' as the first verification information. After receiving the third media data and extracting the third digital watermark, the first conference terminal may decrypt the extracted third digital watermark R by using the public key of the second conference terminal, to obtain the hash value Hash, and then match the hash value Hash with the hash value Hash' to determine a matching result.

For another example, after generating the public key character string allGroupPK and the derived key OTP_OOB based on the master key, the public key of the first conference terminal, and the public key of the second conference terminal, the second conference terminal generates the third digital watermark based on the public key character string allGroupPK, the derived key OTP_OOB, and an HMAC algorithm. The first conference terminal also generates the public key character string allGroupPK' and the derived key OTP_OOB' based on the master key, the public key of the first conference terminal, and the public key of the second conference terminal, and generates the first verification information based on the HMAC algorithm. After receiving the third media data and extracting the third digital watermark, the first conference terminal may compare the third digital watermark with the first verification information to determine whether the third digital watermark is the same as the first verification information.

It should be understood that, in the embodiment shown in FIG. 4, an example in which the conference includes the first conference terminal and the second conference terminal is used. In an actual application, if the conference further includes another conference terminal, the first conference terminal may further receive media data sent by the another conference terminal, and extract a digital watermark embedded in the media data. The first conference terminal may also generate verification information corresponding to the another conference terminal, and verify, based on the extracted digital watermark and the generated verification information, whether a man-in-the-middle attack exists.

Because a length of a digital watermark may be long, if a complete digital watermark is embedded in each media frame, and a digital watermark is extracted for each media frame and matched with verification information, a calculation amount may be large, and a requirement on performance of a conference terminal is high. In a peer to peer (peer to peer, P2P) scenario, performance of the conference terminal can barely support embedding a digital watermark in each to-be-sent media frame, extracting a complete digital watermark from each received media frame, and performing verification. However, during many-to-many group communication, a communication data volume is large, and performance of the conference terminal cannot support embedding a complete digital watermark in each to-be-sent media frame, extracting a complete digital watermark from each received media frame, and performing verification.

To resolve a performance problem of the conference terminal, an embodiment of this application provides a solution: When embedding the first digital watermark in the first media data, the first conference terminal may split the first digital watermark into N parts, where N is an integer greater than 1, and then embed the N parts obtained through splitting in N media frames included in the first media data. In this way, the first digital watermark embedded in each media frame is not a complete first digital watermark, but a part of the first digital watermark. When receiving the first media data and extracting the first digital watermark, the second conference terminal or another conference terminal may separately extract the N media frames to obtain the N parts of the first digital watermark, and obtain the complete first digital watermark by using a splicing method corresponding to the splitting method. For example, the first digital watermark generated by the first conference terminal is abcdefghij, which may be split into ab, cd, ef, gh, and ij, and then ab, cd, ef, gh, and ij are separately embedded in five media frames. The second conference terminal may extract ab, cd, ef, gh, and ij from the five media frames, and then splice the extracted ab, cd, ef, gh, and ij to obtain abcdefghij.

In a possible implementation, it is assumed that a length of the first digital watermark is length (R), and a transmission capacity that is of a digital watermark and that is allowed to be carried in each media frame is length (watermark), a value of N may be determined by using the following formula: N=length (R)/length (watermark). If length (R)/length (watermark) is not an integer, length (R)/length (watermark) may be rounded up.

Similarly, when embedding the third digital watermark in the third media data, the second conference terminal may alternatively split the third digital watermark into M parts, where M is an integer greater than 1, and may be the same as or different from N, and then separately embed the M parts obtained through splitting in M media frames included in the third media data. In this way, the third digital watermark embedded in each media frame is not a complete third digital watermark, but a part of the third digital watermark. When receiving the third media data and extracting the third digital watermark, the first conference terminal or another conference terminal may separately extract the M media frames to obtain the M parts of the third digital watermark, and obtain the complete third digital watermark by using the splicing method corresponding to the splitting method.

In the foregoing solution of this application, the digital watermark is split, so that a length of each part after the splitting is small. This can meet a requirement of a single media frame for a maximum length of an embedded watermark, so that when an audio or a video is played, no exception occurs due to an excessively long embedded digital watermark. For example, the second conference terminal checks the media data sent by the first conference terminal. The second conference terminal extracts the complete first digital watermark from the N media frames. In this case, a process of performing check based on the complete first digital watermark is equivalent to checking all the N media frames. Because if a digital watermark part embedded in any one of the media frames is faulty, the first digital watermark obtained by the second conference terminal is not a correct first digital watermark. Therefore, compared with a solution in which a complete digital watermark is embedded in each media frame, the foregoing solution can reduce a quantity of detection times of the conference terminal and reduce a performance requirement for the conference terminal, but does not reduce a quantity of detected media frames. This ensures continuity check on the media frames while the quantity of detection times is reduced, effectively improves data transmission security, and detects whether man-in-the-middle attack behavior exists in time.

In a possible design, the first digital watermark or a part of the first digital watermark may not be embedded in each media frame, but the complete first digital watermark may be embedded in one of every X media frames. In this case, the second conference terminal performs check once every time the second conference terminal receives X media frames. This can also reduce a quantity of check times of the second conference terminal, to reduce the performance requirement for the conference terminal. For example, X=10, the first conference terminal may embed the first digital watermark in a 1^{st} media frame, an 11^{th} media frame, a 21^{st} media frame, and the like, and no longer embed the first digital watermark in 2^{nd} to 10^{th} media frames, 12^{th} to 20^{th} media frames, 22^{nd} to 30^{th} media frames, and the like.

In addition, in a process of a conference, a conference terminal participating in the conference may change, for example, a new conference terminal joins the conference, or a conference terminal that has joined the conference leaves the conference. In order to ensure timeliness of the digital watermark, the conference terminal that leaves the conference cannot continue to obtain and send media data based on the same digital watermark, and the conference terminal that joins the conference later cannot obtain, based on the same digital watermark, media data generated when the conference terminal does not join the conference. The digital watermark may be updated when the conference terminal participating in the conference changes. A method for generating a new digital watermark does not need to be changed, and the digital watermark can be updated by updating the security data used for generating the digital watermark.

For example, if the security data used to generate the first digital watermark includes the master key of the conference, and a fourth conference terminal joins the conference in a process of the conference, the master key may be updated. In other words, the first conference terminal, the second conference terminal, and the fourth conference terminal determine a new master key of the conference through negotiation, and the first conference terminal generates a new digital watermark based on the new master key, for example, a fourth digital watermark. After the first conference terminal generates the fourth digital watermark, the fourth digital watermark may be embedded in media data sent to another conference terminal.

For another example, when a fifth conference terminal that has joined in the process of the conference leaves, the first conference terminal and the second conference terminal may renegotiate to determine a new master key of the conference. It should be understood that the fifth conference terminal no longer participates in a process of negotiating the new master key. The first conference terminal generates a new digital watermark, for example, a fifth digital watermark, based on the new master key. After the first conference terminal generates the fifth digital watermark, the fifth digital watermark may be embedded in media data sent to another conference terminal.

Further, when the conference terminal participating in the conference changes, the digital watermark of the first conference terminal is updated accordingly, and the digital watermark of the second conference terminal may also be updated. In this case, the verification information that is generated by the first conference terminal and that corresponds to the second conference terminal also needs to be updated correspondingly, and the verification information that is generated by the second conference terminal and that corresponds to the first conference terminal is also updated. A manner of generating the digital watermark by the first conference terminal and the second conference terminal does not need to be changed, and only a new digital watermark needs to be generated based on updated security data. A manner of generating the verification information by the first conference terminal and the second conference terminal does not need to be changed, and only new verification information needs to be generated based on the updated security data.

When the digital watermark is updated, after updating the first digital watermark and generating a new digital watermark, the first conference terminal cannot determine whether the second conference terminal and another conference terminal can synchronously update the verification information corresponding to the first conference terminal. To avoid a case in which matching of a new digital watermark fails because some conference terminals do not complete updating, the first conference terminal may delay using the new digital watermark after generating the new digital watermark. Specifically, after generating the new digital watermark, the first conference terminal may still send the media data by using the old digital watermark, and after the media data sent by using the old digital watermark reaches a preset data quantity, the first conference terminal sends the media data by using the new digital watermark. For example, delayed sending of X media frames may be preset, that is, after generating the new digital watermark, the first conference terminal may still send X media frames by using the old digital watermark, and the new digital watermark is embedded in an (X+1)^{th} media frame. For another example, when the first digital watermark is split into the N parts and the N parts are separately embedded in the N media frames, the N media frames may be recorded as one period, and then delayed sending of Y periods may be preset. In other words, after generating the new digital watermark, the first conference terminal may still send media frames of Y periods by using the old digital watermark, and the new digital watermark is embedded in a media frame of a (Y+1)^{th} period.

Correspondingly, after updating the verification information corresponding to the first conference terminal, the second conference terminal may perform matching for the preset quantity of media data sent by the first conference terminal by using the old verification information and the new verification information. If the matching by using the new verification information succeeds, regardless of whether the preset quantity is reached, the new verification information is used for matching subsequently. If the matching by using the old verification information succeeds and a quantity of the media data is still within the preset quantity, it is still considered that a matching result is successful. If the preset quantity is exceeded, the second conference terminal performs matching by using only the new verification information.

Similarly, after the first conference terminal updates the verification information corresponding to the second conference terminal, the first conference terminal may also perform matching for the preset quantity of media data sent by the second conference terminal by using the old verification information and the new verification information. If the matching by using the new verification information succeeds, regardless of whether the preset quantity is reached, the new verification information is used for matching subsequently. If the matching by using the old verification information succeeds and a quantity of the media data is still within the preset quantity, it is still considered that a matching result is successful. If the preset quantity is exceeded, the first conference terminal performs matching by using only the new verification information.

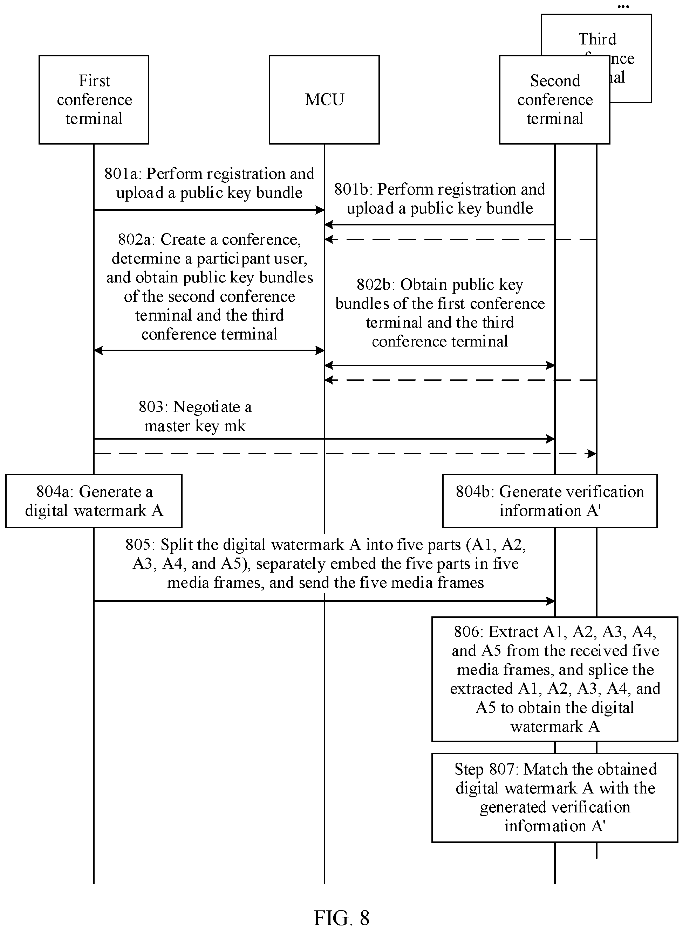

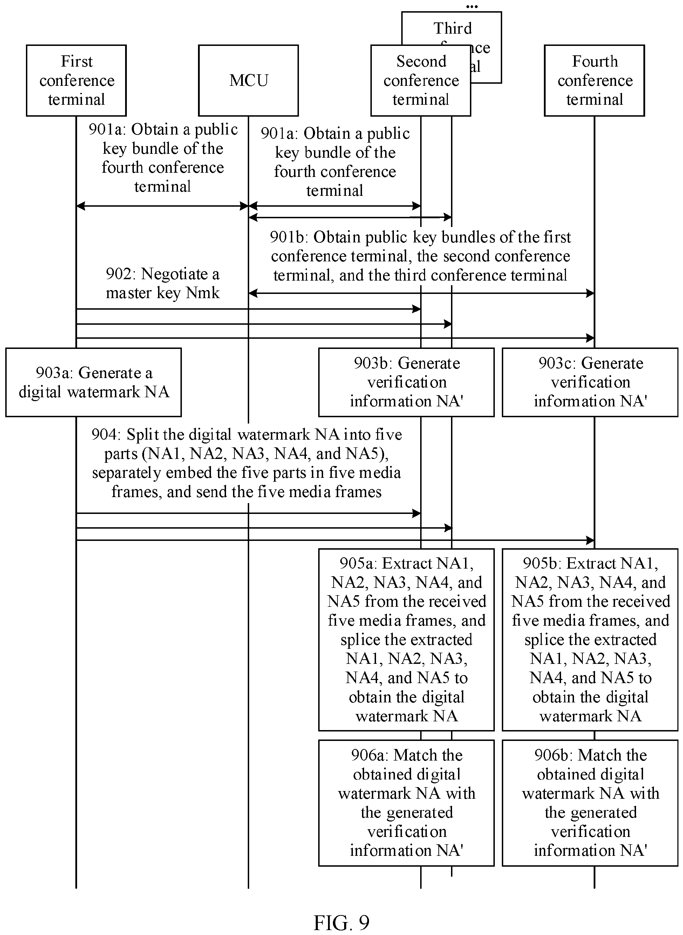

To better understand the foregoing embodiments of this application, the following provides examples with reference to FIG. 8 and FIG. 9.

In a conference data transmission scenario shown in FIG. 8, a conference includes a first conference terminal, a second conference terminal, and a third conference terminal. The steps performed by the first conference terminal and the second conference terminal are used as an example for description.

Step 801a: The first conference terminal registers with an MCU of a video conference system, and sends a public key bundle (public key bundle) of the first conference terminal to the MCU.

Optionally, the public key bundle of the first conference terminal may include a long-term public key LongPKA and a temporary public key epkA.

Step 801b: The second conference terminal registers with the MCU of the video conference system, and sends a public key bundle (public key bundle) of the conference terminal B to the MCU.

Optionally, the public key bundle of the second conference terminal may include a long-term public key LongPKB and a temporary public key epkB.

Step 802a: The first conference terminal creates a conference, and determines that participant users include the first conference terminal, the second conference terminal, and a third conference terminal; and the first conference terminal obtains the public key bundle of the second conference terminal and a public key bundle of the third conference terminal from the MCU.

Step 802b: The second conference terminal determines to join the conference, and obtains the public key bundles of the first conference terminal and the third conference terminal from the MCU.

Step 803: The first conference terminal negotiates a master key mk with the second conference terminal and the third conference terminal.

Step 804a: The first conference terminal generates a digital watermark A.

For example, the first conference terminal generates a public key character string allGroupPK=epkA ∥ epkB ∥ epkC ∥ LongPKA ∥ LongPKB ∥ LongPKC ∥, and then generates a derived key OTP_OOB=KDF(mk, IDA ∥ IDB ∥ IDC ∥ "OOB"), where mk indicates the master key, IDA indicates an identifier of the first conference terminal, IDB indicates an identifier of the second conference terminal, IDC indicates an identifier of the third conference terminal, and OOB indicates an out-of-band parameter; and performs a hash operation on OTP_OOB and allGroupPK to obtain a hash value Hash, and then encrypts the hash value Hash based on a private key of the first conference terminal, to obtain the digital watermark A.

Step 804b: The second conference terminal generates verification information A'.

For example, the second conference terminal generates a public key character string allGroupPK' =epkA ∥ epkB ∥ epkC ∥ LongPKA ∥ LongPKB ∥ LongPKC ∥, and then generates a derived key OTP_OOB'=KDF(mk, IDA ∥ IDB ∥ IDC ∥ "OOB"); and performs a hash operation on OTP_OOB' and allGroupPK' to obtain a hash value Hash', where the hash value Hash' is the verification information A'.

Step 805: The first conference terminal splits the digital watermark A into five parts (A1, A2, A3, A4, and A5), separately embeds the five parts in five media frames, and sends the five media frames to the second conference terminal and the third conference terminal.

Step 806: The second conference terminal extracts A1, A2, A3, A4, and A5 from the received five media frames, and splices the extracted A1, A2, A3, A4, and A5 to obtain the digital watermark A.

Step 807: The second conference terminal matches the obtained digital watermark A with the generated verification information A'.

For example, when the verification information A' is the hash value Hash', the second conference terminal may perform signature verification on the digital watermark A by using a public key of the first conference terminal to obtain the hash value Hash, and then match the hash value Hash with the verification information A'.

If the matching succeeds, it may be considered that no man-in-the-middle attack exists; or if the matching fails, it is considered that the conference is under a man-in-the-middle attack.

Similarly, the second conference terminal may further generate a digital watermark B, and the first conference terminal may further generate verification information B'. The second conference terminal splits the digital watermark B into five parts (B1, B2, B3, B4, and B5), separately embeds the five parts in five media frames, and sends the five media frames to the first conference terminal and the third conference terminal. The first conference terminal extracts B1, B2, B3, B4, and B5 from the received five media frames, splices the extracted B1, B2, B3, B4, and B5 to obtain the digital watermark B, and matches the obtained digital watermark B with the generated verification information B', to detect whether a man-in-the-middle attack exists.

In the conference data transmission scenario shown in the figure, a first conference terminal, a second conference terminal, and a third conference terminal have joined a conference, and in a process of the conference, a fourth conference terminal also joins the conference. In this case, the first conference terminal, the second conference terminal, the third conference terminal, and the fourth conference terminal may perform the following steps according to the procedure shown in FIG. 9.

Step 901a: The first conference terminal, the second conference terminal, and the third conference terminal obtain a public key bundle of the fourth conference terminal.

Step 901b: The fourth conference terminal obtains public key bundles of the first conference terminal, the second conference terminal, and the third conference terminal.

Step 902: The first conference terminal, the second conference terminal, the third conference terminal, and the fourth conference terminal negotiate a new master key Nmk.

Step 903a: The first conference terminal generates a new digital watermark NA.

A manner of generating the digital watermark NA by the first conference terminal is similar to the manner of generating the digital watermark A in step 804a, and differences lie in that a public key (a long-term public key LongPKD and a temporary public key epkD) of the fourth conference terminal is added when allGroupPK is generated, an identifier of the fourth conference terminal is added when OTP_OOB is generated, and the master key mk is replaced with the new master key Nmk.

Step 903b: The second conference terminal generates new verification information NA'.

A manner of generating the verification information NA' by the second conference terminal is similar to the manner of generating the verification information A' in step 804b, and differences lie in that the public key (the long-term public key LongPKD and the temporary public key epkD) of the fourth conference terminal is added when allGroupPK' is generated, the identifier of the fourth conference terminal is added when OTP_OOB' is generated, and the master key mk is replaced with the new master key Nmk.

Step 903c: The fourth conference terminal generates the verification information NA'.

A manner of generating the verification information NA' by the fourth conference terminal is similar to the manner of generating the verification information NA' by the second conference terminal, and reference may be made to an execution manner of step 903b.

Step 904: The first conference terminal splits the digital watermark NA into five parts (NA1, NA2, NA3, NA4, and NA5), separately embeds the five parts in five media frames, and sends the five media frames to the second conference terminal, the third conference terminal, and the fourth conference terminal.

Step 905a: The second conference terminal extracts NA1, NA2, NA3, NA4, and NA5 from the received five media frames, and splices the extracted NA1, NA2, NA3, NA4, and NA5 to obtain the digital watermark NA.

Step 905b: The fourth conference terminal extracts NA1, NA2, NA3, NA4, and NA5 from the received five media frames, and splices the extracted NA1, NA2, NA3, NA4, and NA5 to obtain the digital watermark NA.

Step 906a: The second conference terminal matches the obtained digital watermark NA with the generated verification information NA'.

Step 906b: The fourth conference terminal matches the obtained digital watermark NA with the generated verification information NA'.

If the matching succeeds, it may be considered that no man-in-the-middle attack exists; or if the matching fails, it is considered that the conference is under a man-in-the-middle attack.

Similarly, the second conference terminal may also generate a digital watermark NB, and the first conference terminal, the third conference terminal, and the fourth conference terminal may also generate verification information NB'. The second conference terminal splits the digital watermark NB into five parts (NB1, NB2, NB3, NB4, and NB5), separately embeds the five parts in five media frames, and sends the five media frames to the first conference terminal, the third conference terminal, and the fourth conference terminal of the conference. The first conference terminal, the third conference terminal, and the fourth conference terminal extract NB1, NB2, NB3, NB4, and NB5 from the received five media frames, splice the extracted NB1, NB2, NB3, NB4, and NB5 to obtain the digital watermark NB, and match the obtained digital watermark NB with the generated verification information NB' to detect whether a man-in-the-middle attack exists. The fourth conference terminal may further generate a digital watermark ND, and the first conference terminal, the second conference terminal, and the third conference terminal may further generate verification information ND'. The fourth conference terminal splits the digital watermark ND into five parts (ND1, ND2, ND3, ND4, and ND5), separately embeds the five parts in five media frames, and sends the five media frames to the first conference terminal, the second conference terminal, and the third conference terminal. The first conference terminal, the second conference terminal, and the third conference terminal extract ND1, ND2, ND3, ND4, and ND5 from the received five media frames, splice the extracted ND1, ND2, ND3, ND4, and ND5 to obtain the digital watermark ND, and match the obtained digital watermark ND with the generated verification information ND' to detect whether a man-in-the-middle attack exists.

Based on a same technical concept, an embodiment of this application further provides a conference data transmission apparatus, configured to implement functions of the first conference terminal in the foregoing method embodiments. The apparatus may include modules/units for performing any possible implementation in the foregoing method embodiments. These modules/units may be implemented by hardware, or may be implemented by hardware executing corresponding software.

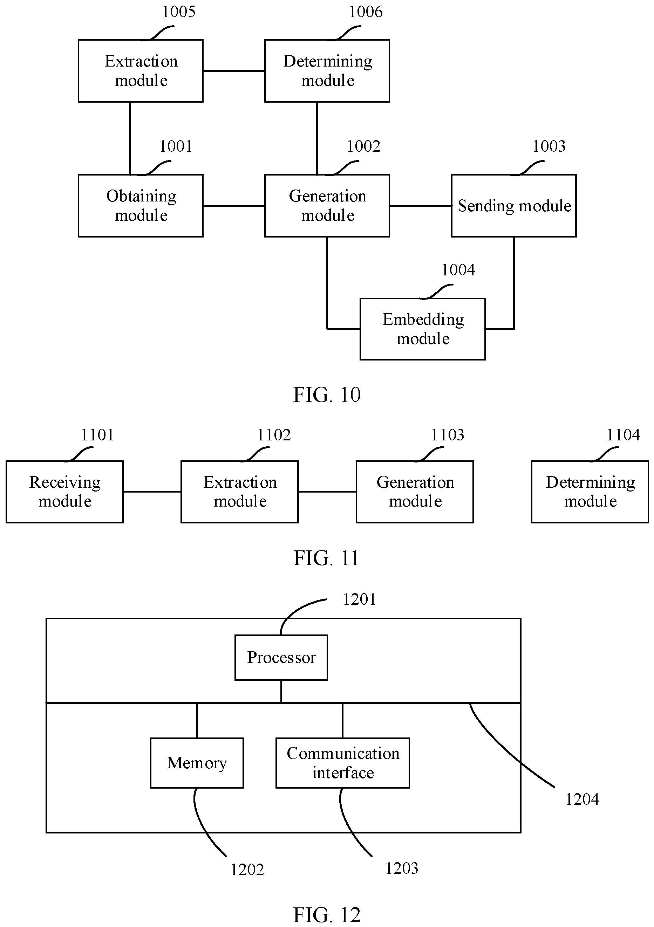

For example, as shown in FIG. 10, the apparatus may include an obtaining module 1001, a generation module 1002, and a sending module 1003. Further, the apparatus may further include one or more of an embedding module 1004, an extraction module 1005, and a determining module 1006.

The obtaining module 1001, configured to obtain security data of a conference, where the security data of the conference includes one or more of the following: a master key of the conference, a conference joining password of the conference, a public key of at least one of a plurality of conference apparatuses participating in the conference, and a private key of the first conference apparatus, where the master key is determined by the plurality of conference apparatuses through negotiation, and the plurality of conference apparatuses include the first conference apparatus and a second conference apparatus.

The generation module 1002 is configured to generate a first digital watermark based on the security data.

The sending module 1003 is configured to send first media data to the second conference apparatus, where the first digital watermark is embedded in the first media data, for the second conference apparatus to determine, based on the first digital watermark, whether a man-in-the-middle attack exists.

In a possible implementation, the first media data includes N media frames, and the apparatus further includes the embedding module 1004, configured to split the first digital watermark into N parts; and separately embed the N parts of the first digital watermark in the N media frames, where N is an integer greater than 1.

In a possible implementation, the plurality of conference apparatuses further include a third conference apparatus, and the sending module 1003 is further configured to send the first media data to the third conference apparatus, for the third conference apparatus to determine, based on the first digital watermark, whether a man-in-the-middle attack exists.

In a possible implementation, the security data includes the master key, the private key of the first conference apparatus, and a public key of each of the plurality of conference apparatuses; and the generation module 1002 is specifically configured to generate the first digital watermark based on the master key, the private key of the first conference apparatus, a public key of the first conference apparatus, and a public key of the second conference apparatus.

In a possible implementation, the plurality of conference apparatuses further include a third conference apparatus, and the generation module 1002 is further configured to: generate a second digital watermark based on the master key, the private key of the first conference apparatus, the public key of the first conference apparatus, and a public key of the third conference apparatus; and the sending module 1003 is further configured to send second media data to the third conference apparatus, where the second digital watermark is embedded in the second media data, for the third conference apparatus to determine, based on the third digital watermark, whether a man-in-the-middle attack exists.

In a possible implementation, the generation module 1002 is specifically configured to generate a public key character string based on the public key of the first conference apparatus and the public key of the second conference apparatus; generate a derived key based on the master key, an identifier of the first conference apparatus, and an identifier of the second conference apparatus; and perform digital signing on the public key character string and the derived key by using the private key of the first conference apparatus to obtain the first digital watermark.

In a possible implementation, the obtaining module 1001 is further configured to obtain third media data sent by the second conference apparatus. The apparatus further includes the extraction module 1005, configured to extract a third digital watermark from the third media data. The generation module 1002 is further configured to generate first verification information based on the security data. The apparatus further includes the determining module 1006, configured to determine, based on a matching result between the third digital watermark and the first verification information, whether a man-in-the-middle attack exists.

In a possible implementation, the security data includes the master key, the private key of the first conference apparatus, and the public key of the second conference apparatus. When generating the first verification information based on the security data, the generation module 1002 is specifically configured to generate, based on the master key, the public key of the first conference apparatus, and the public key of the second conference apparatus, the first verification information corresponding to the second conference apparatus.

In a possible implementation, the third digital watermark is data obtained through digital signing by using a private key of the second conference apparatus; and the determining module 1006 is specifically configured to: decrypt the third digital watermark by using the public key of the second conference apparatus, match data obtained through the decryption with the first verification information, and if the matching fails, determine that a man-in-the-middle attack exists.

In a possible implementation, the third media data includes M media frames, and the extraction module 1005 is specifically configured to: extract M parts of the third digital watermark from the M media frames; and obtain the third digital watermark based on the extracted M parts of the third digital watermark.

In a possible implementation, the security data includes the master key; and the generation module 1002 is further configured to: when a fourth conference apparatus joins the conference, update the master key, and generate a fourth digital watermark based on an updated master key, where a plurality of conference apparatuses that obtain the updated master key through negotiation include the first conference apparatus, the second conference apparatus, and the fourth conference apparatus. The sending module 1003 is further configured to send fourth media data to the second conference apparatus, where the fourth digital watermark is embedded in the fourth media data, for the second conference apparatus to determine, based on the fourth digital watermark, whether a man-in-the-middle attack exists.

In a possible implementation, the security data of the conference includes the master key, the plurality of conference apparatuses further include a fifth conference apparatus, and the generation module 1002 is further configured to: when the fifth conference apparatus leaves the conference, update the master key, and generate a fifth digital watermark based on an updated master key, where a plurality of conference apparatuses that obtain the updated master key through negotiation do not include the fifth conference apparatus. The sending module 1003 is further configured to send fifth media data to the second conference apparatus, where the fifth digital watermark is embedded in the fifth media data, for the second conference apparatus to determine, based on the fifth digital watermark, whether a man-in-the-middle attack exists.

Based on a same technical concept, an embodiment of this application further provides a conference data transmission apparatus, configured to implement functions of the second conference terminal in the foregoing method embodiments. The apparatus may include modules/units for performing any possible implementation in the foregoing method embodiments. These modules/units may be implemented by hardware, or may be implemented by hardware executing corresponding software.

For example, as shown in FIG. 11, the apparatus may include a receiving module 1101, an extraction module 1102, a generation module 1103, and a determining module 1104.

Specifically, the receiving module 1101 is configured to receive first media data sent by a first conference terminal, where a first digital watermark is embedded in the first media data. The extraction module 1102 is configured to extract the first digital watermark from the first media data. The generation module 1103 is configured to generate first verification information based on security data of a conference, where the security data of the conference includes one or more of the following: a master key of the conference, a conference joining password of the conference, and a public key of at least one of a plurality of conference terminals participating in the conference, where the master key is determined by the plurality of conference terminals through negotiation, and the plurality of conference terminals include the first conference terminal and a second conference terminal. The determining module 1104 is configured to determine, based on a matching result between the first digital watermark and the first verification information, whether a man-in-the-middle attack exists.

In a possible implementation, the first media data includes N media frames, and the extraction module 1102 is specifically configured to: extract N parts of the first digital watermark from the N media frames; and obtain the first digital watermark based on the extracted N parts of the first digital watermark.

In a possible implementation, the security data includes the master key, a public key of the first conference terminal, and a public key of the second conference terminal, and the first digital watermark is generated based on the security data. The generation module 1103 is specifically configured to generate the first verification information based on the master key, the public key of the first conference terminal, and the public key of the second conference terminal.

In a possible implementation, the first digital watermark is obtained by performing digital signing on a public key character string and a derived key by using a private key of the first conference terminal, where the public key character string is generated based on the public key of the first conference terminal and the public key of the second conference terminal, and the derived key is generated based on the master key, an identifier of the first conference terminal, and an identifier of the second conference terminal. The generation module 1103 is specifically configured to: generate the public key character string based on the public key of the first conference terminal and the public key of the second conference terminal; generate, by the second conference terminal, the derived key based on the master key, the identifier of the first conference terminal, and the identifier of the second conference terminal; and perform, by the second conference terminal, a hash operation on the public key character string and the derived key to obtain the first verification information. The determining module 1104 is specifically configured to: decrypt the first digital watermark based on the public key of the first conference terminal, match data obtained through decryption with the first verification information, and if the matching fails, determine that a man-in-the-middle attack exists.

In a possible implementation, the security data includes the master key. The generation module 1103 is further configured to: when the third conference terminal joins the conference, update the master key, and generate second verification information based on an updated master key, where a plurality of conference terminals that obtain the updated master key through negotiation include the first conference terminal, the second conference terminal, and the third conference terminal. The receiving module 1101 is further configured to receive second media data sent by the first conference terminal, where a second digital watermark is embedded in the second media data. The extraction module 1102 is further configured to extract the second digital watermark from the second media data. The determining module 1104 is further configured to determine, based on a matching result between the second digital watermark and the second verification information, whether a man-in-the-middle attack exists.

In a possible implementation, the security data of the conference includes the master key, the plurality of conference terminals further include a fourth conference terminal, and the generation module 1103 is further configured to: when the fourth conference terminal leaves the conference, update the master key; and generate third verification information based on an updated master key, where a plurality of conference terminals that obtain the updated master key through negotiation do not include the fourth conference terminal. The receiving module 1101 is further configured to receive third media data sent by the first conference terminal, where a third digital watermark is embedded in the third media data. The extraction module 1102 is further configured to extract the third digital watermark from the third media data. The determining module 1104 is further configured to determine, based on a matching result between the third digital watermark and the third verification information, whether a man-in-the-middle attack exists.

Based on a same technical concept, an embodiment of this application further provides a computer device, configured to implement a function of a control node in the foregoing method embodiments. The computer device includes a processor 1201 shown in FIG. 12, and a memory 1202 connected to the processor 1201. Further, the computer device may further include a communication interface 1203 and a communication bus 1204.

The processor 1201 may be a general purpose processor, a microprocessor, an application specific integrated circuit (application specific integrated circuit, ASIC), a field programmable gate array (field programmable gate array, FPGA) or another programmable logic device, a discrete gate or a transistor logic device, or one or more integrated circuits configured to control program execution of the solutions in this application. The general-purpose processor may be a microprocessor, any conventional processor, or the like. The method steps disclosed with reference to embodiments of this application may be directly performed by a hardware processor, or may be performed by a combination of hardware and software modules in the processor.

The memory 1202 is configured to store program instructions and/or data, so that the processor 1201 invokes the instructions and/or the data stored in the memory 1202, to implement the foregoing functions of the processor 1201. The memory 1202 may be a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), or any other medium capable of carrying or storing expected program code in a form of instruction or data structure and capable of being accessed by a computer, but is not limited thereto. The memory 1202 may exist independently, for example, an off-chip memory, and is connected to the processor 1201 through the communication bus 1204. The memory 1202 may be alternatively integrated with the processor 1201. The memory 1202 may include an internal memory and an external memory (like a hard disk).

The communication interface 1203 is configured to communicate with another device, for example, a PCI bus interface, a network adapter, a radio access network (radio access network, RAN), or a wireless local area network (wireless local area network, WLAN).

The communication bus 1204 may include a path, used to transmit information between the foregoing components.

For example, the computer device may be the first conference terminal in the foregoing method embodiments, or may be the second conference terminal in the foregoing method embodiments.

When the computer device is the first conference terminal in the foregoing method embodiments, the processor 1201 is configured to invoke the computer program stored in the memory 1202, and perform the following steps by using the communication interface 1203: obtaining security data of a conference, where the security data of the conference includes one or more of the following: a master key of the conference, a conference joining password of the conference, a public key of at least one of a plurality of conference terminals participating in the conference, and a private key of the first conference terminal, where the master key is determined by the plurality of conference terminals through negotiation, and the plurality of conference terminals include the first conference terminal and a second conference terminal; generating a first digital watermark based on the security data; and sending first media data to the second conference terminal, where the first digital watermark is embedded in the first media data, for the second conference terminal to determine, based on the first digital watermark, whether a man-in-the-middle attack exists.

In addition, the foregoing components may be further configured to support another process executed by the first conference terminal. For beneficial effects, refer to the foregoing descriptions. Details are not described herein again.

When the computer device is the second conference terminal in the foregoing method embodiments, the processor 1201 is configured to invoke the computer program stored in the memory 1202, and perform the following steps by using the communication interface 1203: receiving first media data sent by a first conference terminal, where a first digital watermark is embedded in the first media data; extracting the first digital watermark from the first media data; generating first verification information based on security data of the conference, where the security data of the conference includes one or more of the following: a master key of the conference, a conference joining password of the conference, and a public key of at least one of a plurality of conference terminals participating in the conference, where the master key is determined by the plurality of conference terminals through negotiation, and the plurality of conference terminals include the first conference terminal and the second conference terminal; and determining, based on a matching result between the first digital watermark and the first verification information, whether a man-in-the-middle attack exists.

In addition, the foregoing components may be further configured to support another process executed by the second conference terminal. For beneficial effects, refer to the foregoing descriptions. Details are not described herein again.

Based on a same technical concept, an embodiment of this application provides a conference data transmission system. The system includes at least the first conference data transmission apparatus shown in FIG. 10 and the second conference data transmission apparatus shown in FIG. 11, or includes at least the computer device used as the first conference terminal shown in FIG. 12 and the computer device used as the second conference terminal shown in FIG. 12.

In a possible implementation, the system further includes a conference server, configured to: receive first media data sent by the first conference data transmission apparatus/first computer device, and send the first media data to the second conference data transmission apparatus/second computer device.

Based on a same technical concept, an embodiment of this application further provides a computer-readable storage medium. The computer-readable storage medium stores computer-readable instructions. When the computer-readable instructions are run on a computer, the foregoing method embodiments are performed.

Based on a same technical concept, an embodiment of this application further provides a computer program product including instructions. When the computer program product runs on a computer, the foregoing method embodiments are performed.

It should be understood that, in descriptions of this application, words such as "first" and "second" are merely used for distinction and description, and cannot be understood as an indication or implication of relative importance or an indication or implication of a sequence. Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but is not limited to", unless otherwise specifically emphasized.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of another programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Although some preferred embodiments of this application have been described, persons skilled in the art can make changes and modifications to these embodiments once they learn the basic inventive concept. Therefore, the following claims are intended to be construed as to cover the preferred embodiments and all changes and modifications falling within the scope of this application.

Obviously, persons skilled in the art can make various modifications and variations to embodiments of this application without departing from the spirit and scope of embodiments of this application. In this case, this application is intended to cover these modifications and variations of embodiments of this application provided that they fall within the scope of protection defined by the following claims and their equivalent technologies.

## Claims

1. A conference data transmission method, applied to a first conference terminal participating in a conference, wherein the method comprises:
obtaining security data of the conference, wherein the security data of the conference comprises one or more of the following: a master key of the conference, a conference joining password of the conference, a public key of at least one of a plurality of conference terminals participating in the conference, and a private key of the first conference terminal, wherein the master key is determined by the plurality of conference terminals through negotiation, and the plurality of conference terminals comprise the first conference terminal and a second conference terminal;
generating a first digital watermark based on the security data; and
sending first media data to the second conference terminal, wherein the first digital watermark is embedded in the first media data, for the second conference terminal to determine, based on the first digital watermark, whether a man-in-the-middle attack exists.

2. The method according to claim 1, wherein the first media data comprises N media frames, and the method further comprises:
splitting the first digital watermark into N parts; and
separately embedding the N parts of the first digital watermark in the N media frames, wherein N is an integer greater than 1.

3. The method according to claim 1 or 2, wherein the plurality of conference terminals further comprise a third conference terminal, and the method further comprises:
sending the first media data to the third conference terminal, for the third conference terminal to determine, based on the first digital watermark, whether a man-in-the-middle attack exists.

4. The method according to claim 1 or 2, wherein the security data comprises the master key, the private key of the first conference terminal, and a public key of each of the plurality of conference terminals; and
the generating a first digital watermark based on the security data comprises:
generating the first digital watermark based on the master key, the private key of the first conference terminal, a public key of the first conference terminal, and a public key of the second conference terminal.

5. The method according to claim 4, wherein the plurality of conference terminals further comprise a third conference terminal, and the method further comprises:
generating a second digital watermark based on the master key, the private key of the first conference terminal, the public key of the first conference terminal, and a public key of the third conference terminal; and
sending second media data to the third conference terminal, wherein the second digital watermark is embedded in the second media data, for the third conference terminal to determine, based on the third digital watermark, whether a man-in-the-middle attack exists.

6. The method according to claim 4 or 5, wherein the generating the first digital watermark based on the master key, the private key of the first conference terminal, a public key of the first conference terminal, and a public key of the second conference terminal comprises:
generating a public key character string based on the public key of the first conference terminal and the public key of the second conference terminal;
generating a derived key based on the master key, an identifier of the first conference terminal, and an identifier of the second conference terminal; and
performing digital signing on the public key character string and the derived key by using the private key of the first conference terminal to obtain the first digital watermark.

7. The method according to any one of claims 1 to 6, wherein the method further comprises:
receiving third media data sent by the second conference terminal;
extracting a third digital watermark from the third media data;
generating first verification information based on the security data; and
determining, based on a matching result between the third digital watermark and the first verification information, whether a man-in-the-middle attack exists.

8. The method according to claim 7, wherein the security data comprises the master key, the private key of the first conference terminal, and the public key of the second conference terminal; and
the generating first verification information based on the security data comprises:
generating, based on the master key, the public key of the first conference terminal, and the public key of the second conference terminal, the first verification information corresponding to the second conference terminal.

9. The method according to claim 8, wherein the third digital watermark is data obtained through digital signing by using a private key of the second conference terminal; and
the determining, based on a matching result between the third digital watermark and the first verification information, whether a man-in-the-middle attack exists comprises:
decrypting the third digital watermark by using the public key of the second conference terminal, matching data obtained through the decryption with the first verification information, and if the matching fails, determining that a man-in-the-middle attack exists.

10. The method according to any one of claims 7 to 9, wherein the third media data comprises M media frames, and the extracting a third digital watermark from the third media data comprises:
extracting M parts of the third digital watermark from the M media frames; and
obtaining the third digital watermark based on the extracted M parts of the third digital watermark.

11. The method according to any one of claims 1 to 10, wherein the security data comprises the master key; and after the generating a first digital watermark based on the security data, the method further comprises:
when a fourth conference terminal joins the conference, updating the master key, and generating a fourth digital watermark based on an updated master key, wherein a plurality of conference terminals that obtain the updated master key through negotiation comprise the first conference terminal, the second conference terminal, and the fourth conference terminal; and
sending fourth media data to the second conference terminal, wherein the fourth digital watermark is embedded in the fourth media data, for the second conference terminal to determine, based on the fourth digital watermark, whether a man-in-the-middle attack exists.

12. The method according to any one of claims 1 to 10, wherein the security data of the conference comprises the master key, the plurality of conference terminals further comprise a fifth conference terminal, and the method further comprises:
when the fifth conference terminal leaves the conference, updating the master key, and generating a fifth digital watermark based on an updated master key, wherein a plurality of conference terminals that obtain the updated master key through negotiation do not comprise the fifth conference terminal; and
sending fifth media data to the second conference terminal, wherein the fifth digital watermark is embedded in the fifth media data, for the second conference terminal to determine, based on the fifth digital watermark, whether a man-in-the-middle attack exists.

13. A conference data transmission apparatus, wherein the apparatus is a first conference apparatus participating in a conference, and the apparatus comprises:
an obtaining module, configured to obtain security data of the conference, wherein the security data of the conference comprises one or more of the following: a master key of the conference, a conference joining password of the conference, a public key of at least one of a plurality of conference apparatuses participating in the conference, and a private key of the first conference apparatus, wherein the master key is determined by the plurality of conference apparatuses through negotiation, and the plurality of conference apparatuses comprise the first conference apparatus and a second conference apparatus;
a generation module, configured to generate a first digital watermark based on the security data; and
a sending module, configured to send first media data to the second conference apparatus, wherein the first digital watermark is embedded in the first media data, for the second conference apparatus to determine, based on the first digital watermark, whether a man-in-the-middle attack exists.

14. The apparatus according to claim 13, wherein the first media data comprises N media frames, and the apparatus further comprises an embedding module, configured to:
split the first digital watermark into N parts; and
separately embed the N parts of the first digital watermark in the N media frames, wherein N is an integer greater than 1.

15. The apparatus according to claim 13 or 14, wherein the plurality of conference apparatuses further comprise a third conference apparatus, and the sending module is further configured to:
send the first media data to the third conference apparatus, for the third conference apparatus to determine, based on the first digital watermark, whether a man-in-the-middle attack exists.

16. The apparatus according to claim 13 or 14, wherein the security data comprises the master key, the private key of the first conference apparatus, and a public key of each of the plurality of conference apparatuses; and
the generation module is specifically configured to:
generate the first digital watermark based on the master key, the private key of the first conference apparatus, a public key of the first conference apparatus, and a public key of the second conference apparatus.

17. The apparatus according to claim 16, wherein the plurality of conference apparatuses further comprise a third conference apparatus;
the generation module is further configured to generate a second digital watermark based on the master key, the private key of the first conference apparatus, the public key of the first conference apparatus, and a public key of the third conference apparatus; and
the sending module is further configured to send second media data to the third conference apparatus, wherein the second digital watermark is embedded in the second media data, for the third conference apparatus to determine, based on the third digital watermark, whether a man-in-the-middle attack exists.

18. The apparatus according to claim 16 or 17, wherein the generation module is specifically configured to:
generate a public key character string based on the public key of the first conference apparatus and the public key of the second conference apparatus;
generate a derived key based on the master key, an identifier of the first conference apparatus, and an identifier of the second conference apparatus; and
perform digital signing on the public key character string and the derived key by using the private key of the first conference apparatus to obtain the first digital watermark.

19. The apparatus according to any one of claims 13 to 18, wherein the obtaining module is further configured to obtain third media data sent by the second conference apparatus;
the apparatus further comprises an extraction module, configured to extract a third digital watermark from the third media data;
the generation module is further configured to generate first verification information based on the security data; and
the apparatus further comprises a determining module, configured to determine, based on a matching result between the third digital watermark and the first verification information, whether a man-in-the-middle attack exists.

20. The apparatus according to claim 19, wherein the security data comprises the master key, the private key of the first conference apparatus, and the public key of the second conference apparatus; and
when generating the first verification information based on the security data, the generation module is specifically configured to:
generate, based on the master key, the public key of the first conference apparatus, and the public key of the second conference apparatus, the first verification information corresponding to the second conference apparatus.

21. The apparatus according to claim 20, wherein the third digital watermark is data obtained through digital signing by using a private key of the second conference apparatus; and
the determining module is specifically configured to:
decrypt the third digital watermark by using the public key of the second conference apparatus, match data obtained through the decryption with the first verification information, and if the matching fails, determine that a man-in-the-middle attack exists.

22. The apparatus according to any one of claims 19 to 21, wherein the third media data comprises M media frames, and the extraction module is specifically configured to:
extract M parts of the third digital watermark from the M media frames; and
obtain the third digital watermark based on the extracted M parts of the third digital watermark.

23. The apparatus according to any one of claims 13 to 22, wherein the security data comprises the master key;
the generation module is further configured to: when a fourth conference apparatus joins the conference, update the master key, and generate a fourth digital watermark based on an updated master key, wherein a plurality of conference apparatuses that obtain the updated master key through negotiation comprise the first conference apparatus, the second conference apparatus, and the fourth conference apparatus; and
the sending module is further configured to send fourth media data to the second conference apparatus, wherein the fourth digital watermark is embedded in the fourth media data, for the second conference apparatus to determine, based on the fourth digital watermark, whether a man-in-the-middle attack exists.

24. The apparatus according to any one of claims 13 to 22, wherein the security data of the conference comprises the master key, the plurality of conference apparatuses further comprise a fifth conference apparatus;
the generation module is further configured to: when the fifth conference apparatus leaves the conference, update the master key, and generate a fifth digital watermark based on an updated master key, wherein a plurality of conference apparatuses that obtain the updated master key through negotiation do not comprise the fifth conference apparatus; and
the sending module is further configured to send fifth media data to the second conference apparatus, wherein the fifth digital watermark is embedded in the fifth media data, for the second conference apparatus to determine, based on the fifth digital watermark, whether a man-in-the-middle attack exists.

25. A conference data transmission system, wherein the system comprises at least the first conference apparatus and the second conference apparatus according to any one of claims 13 to 24, wherein
the second conference apparatus is configured to: receive first media data sent by the first conference apparatus, wherein a first digital watermark is embedded in the first media data; extract the first digital watermark from the first media data; generate first verification information based on security data of a conference, wherein the security data of the conference comprises one or more of the following: a master key of the conference, a conference joining password of the conference, and a public key of at least one of a plurality of conference apparatuses participating in the conference, wherein the master key is determined by the plurality of conference apparatuses through negotiation, and the plurality of conference apparatuses comprise the first conference apparatus and a second conference apparatus; and determine, based on a matching result between the first digital watermark and the first verification information, whether a man-in-the-middle attack exists.

26. The system according to claim 25, wherein the system further comprises a conference server, configured to: receive first media data sent by the first conference apparatus, and send the first media data to the second conference apparatus.

27. A computer device, wherein the computer device comprises a memory and a processor;
the memory stores a computer program; and
the processor is configured to invoke the computer program stored in the memory, to perform the method according to any one of claims 1 to 12.

28. A computer-readable storage medium, wherein the computer-readable medium stores instructions, and when the instructions are run on a computer, the computer is enabled to perform the method according to any one of claims 1 to 12.
